# EUROPEAN PATENT APPLICATION

(11) **EP 2 124 442 A2**
(43) Date of publication of application: **25.11.2009**
(21) Application number: 09003204.6
(22) Date of filing: 05.03.2009
(51) Int. Cl.: H04N 7/173

(54) **Mobile terminal and method of downloading content therein**

(30) Priority: 20.05.2008 KR 20080046668
(71) Applicant: LG Electronics Inc., Seoul 150-010 (KR)
(72) Inventor: Choi, Kwang Hun, Seoul, 153-801 (KR)
(74) Representative: Katérle, Axel

(57) **Abstract**

A mobile terminal and method of downloading a content therein are provided. This may include receiving information at the mobile terminal regarding downloadable content and a specific time to download the content from a broadcast network, and providing an indication on a display of the mobile terminal to download the downloadable content based on the specific time. This may also include selecting to download the downloadable content, and downloading the content from the broadcast network to the mobile terminal based on the selection.

## Description

### BACKGROUND

### 1. Field

Embodiments of the present invention may relate to a terminal, and more particularly, to a mobile terminal and method of downloading a content therein.

### 2. Background

A mobile terminal may perform various functions. Examples of such functions may include data and voice communications, capturing images and video via a camera, recording audio, playing music files and outputting music via a speaker system, and displaying images and video on a display. Some terminals may include additional functionality that supports game playing, while other terminals may be configured as multimedia players. Mobile terminals may be configured to receive broadcast and multicast signals that permit viewing of contents, such as videos and television programs.

There are efforts to support and increase functionality of mobile terminals. Such efforts include software and hardware improvements, as well as changes and improvements in structural components that form the mobile terminal.

A broadcast signal may be received on a broadcast channel from a broadcast managing server and may then be outputted. If the broadcast channel is switched, the mobile terminal may output a broadcast signal received on the switched broadcast channel.

### BRIEF DESCRIPTION OF THE DRAWINGS

Arrangements and embodiments may be described in detail with reference to the following drawings in which like reference numerals refer to like elements and wherein:

FIG. 1 is a block diagram of a mobile terminal according to an example arrangement;

FIG. 2 is a front view of a mobile terminal according to an example arrangement;

FIG. 3 is a rear view of a mobile terminal according to an example arrangement;

FIG. 4 illustrates a wireless communication system in which a mobile terminal can operate;

FIG. 5 is a flowchart showing a method of downloading a content in a mobile terminal according to an example embodiment of the present invention;

FIGs. 6A to 6D are screen configurations for announcing a content downloading function in a mobile terminal according to an example embodiment of the present invention;

FIGs. 7A to 7E are screen configurations for announcing a content downloading function in a mobile terminal according to an example embodiment of the present invention;

FIGs. 8A to 8E are screen configurations for announcing a content downloading function in a mobile terminal according to an example embodiment of the present invention;

FIG. 9A and FIG. 9B are screen configurations for announcing a content download completion in a mobile terminal according to an example embodiment of the present invention;

FIG. 10A and FIG. 10B are screen configurations for displaying a content downloadable time table in a mobile terminal according to an example embodiment of the present invention;

FIGs. 11A to 11C are screen configurations for a content relevant reservation and execution using a content downloadable time table in a mobile terminal according to an example embodiment of the present invention;

FIG. 12 is a flowchart showing a method of downloading a content in a mobile terminal according to an example embodiment of the present invention;

FIGs. 13A to 13C are screen configurations for a content download in case of a broadcast mode entry in a mobile terminal according to an example embodiment of the present invention;

FIGs. 14A to 14D are screen configurations for a content download in case of receiving a content download request from a server in a mobile terminal according to an example embodiment of the present invention;

FIGs. 15A to 15D are screen configurations for a content download in case of a content providing channel selection by a user in a mobile terminal according to an example embodiment of the present invention;

FIGs. 16A to 16D are screen configurations for an entry to a content providing channel and a selected content download in case of selecting a content from a content list in a mobile terminal according to an example embodiment of the present invention;

FIGs. 17A to 17D are screen configurations for performing a storage, output and preview of a downloaded content in a mobile terminal according to an example embodiment of the present invention;

FIG. 18A and FIG. 18B are screen configurations for a case of a content download completion in a course of outputting a broadcast in a mobile terminal according to an example embodiment of the present invention;

FIG. 19A and FIG. 19B are screen configurations for a case of a content download completion in a course of driving an application in a mobile terminal according to an example embodiment of the present invention; and

FIGs. 20 to 21B are screen configurations for a case of a channel switching in a course of downloading a content in a mobile terminal according to an example embodiment of the present invention.

### DETAILED DESCRIPTION

Embodiments of the present invention may be applicable to various types of terminals. Examples of such terminals may include mobile as well as stationary terminals, such as mobile phones, user equipment, smart phones, DTV, computers, digital broadcast terminals, personal digital assistants, portable multimedia players (PMP) and navigators. For ease of description, the following description may be with regard to a mobile terminal, although such teachings may apply to other types of terminals.

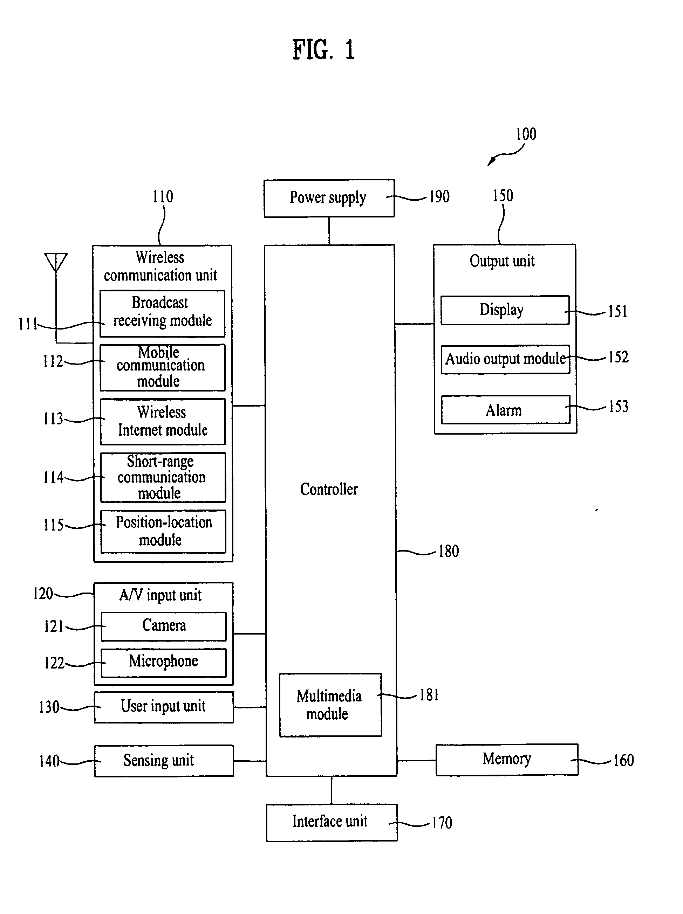

FIG. 1 is a block diagram of a mobile terminal according to an example arrangement. Other arrangements may also be provided.

FIG. 1 shows that a mobile terminal 100 may include a wireless communication unit 110, an audio/video (A/V) input unit 120, a user input unit 130, a sensing unit 140, an output unit 150, a memory 160 (or storage unit), an interface unit 170, a controller 180, and a power supply unit 190. The mobile terminal 100 may also be implemented with a smaller or larger number of components than as shown in FIG. 1.

The wireless communication unit 110 may include one or more components that permit wireless communication between the mobile terminal 100 and a wireless communication system or network within which the mobile terminal 100 is located. For example, the wireless communication unit 110 may include at least one of a broadcast receiving module 111, a mobile communication module 112, a wireless Internet module 113, a short-range communication module 114, and a position-location module 115 (or GPS module). In case of non-mobile terminals, the wireless communication unit 110 may be replaced with a wire communication unit. The wireless communication unit 110 and the wire communication unit may be commonly referred to as a communication unit.

The broadcast receiving module 111 may receive a broadcast signal and/or broadcast related information from an external broadcast managing entity via a broadcast channel. The broadcast channel may include a satellite channel, a terrestrial channel and/or some other type of communicating channel. The broadcast managing entity may be a system that transmits a broadcast signal and/or broadcast related information. Examples of broadcast related information include information associated with a broadcast channel, a broadcast program, a broadcast service provider, etc. The broadcast related information may include an electronic program guide (EPG) of digital multimedia broadcasting (DMB) and/or electronic service guide (ESG) of digital video broadcast-handheld (DVB-H). In addition, the broadcast signal may be a TV broadcast signal, a radio broadcast signal, and/or a data broadcast signal, etc. The broadcast signal may further include a broadcast signal combined with a TV or radio broadcast signal.

The broadcast receiving module 111 may receive broadcast signals transmitted from various types of broadcast systems. For example, the broadcasting systems may include the digital multimedia broadcasting-terrestrial (DMB-T), the digital multimedia broadcasting-satellite (DMB-S), the digital video broadcast-handheld (DVB-H), the data broadcasting system known as media forward link only (MediaFLO®) and the integrated services digital broadcast-terrestrial (ISDB-T) system. The receiving of multicast signals may also be provided. Furthermore, data received by the broadcast receiving module 111 may be stored in the memory 160, for example.

The mobile communication module 112 may transmit/receive wireless signals to/from one or more network entities (e.g., base station, Node-B). The signals may represent audio, video, multimedia, control signaling, and data, etc.

The wireless Internet module 113 may support Internet access for the mobile terminal 100. The wireless Internet module 113 may be internally or externally coupled to the terminal 100.

The short-range communication module 114 may facilitate relatively short-range communications. Suitable technologies for implementing this module may include radio frequency identification (RFID), infrared data association (IrDA), ultra-wideband (UWB), as well as networking technologies such as Bluetooth and ZigBee.

The position-location module 115 may also be provided in the wireless communication unit 110 to identify or otherwise obtain the location or position of the mobile terminal 100. The position-location module 115 may be provided using global positioning system (GPS) components that cooperate with associated satellites, network components, and/or combinations thereof. The position-location module 115 may calculate distance information and accurate time information from at least three satellites and then precisely calculate current 3-dimensional position information according to latitude, longitude and altitude by applying triangulation to the calculated information. A method of calculating position and time information using three satellites and a method of correcting errors of the calculated position and time information using a single satellite are known. The position-location module 115 may calculate speed information by continuously calculating a current real-time position or location.

The audio/video (A/V) input unit 120 may provide audio or video signals to the mobile terminal 100. The A/V input unit 120 may include a camera 121 and a microphone 122. The camera 121 may receive and process image frames of still pictures or video. The microphone 122 may receive an external audio signal while the portable device is in a particular mode, such as a phone call mode, recording mode and/or voice recognition mode. The received audio signal may then be processed and converted into digital data. The portable device, and in particular, the A/V input unit 120, may include noise removing algorithms to remove noise generated in the course of receiving the external audio signal. Data generated by the A/V input unit 120 may be stored in the memory 160, utilized by the output unit 150, and/or transmitted via one or more modules of the wireless communication unit 110. Two or more microphones and/or cameras may also be used.

The user input unit 130 may generate input data responsive to user manipulation of an associated input device or devices. Examples of such devices may include a keypad, a dome switch, a touchpad (e.g., static pressure/capacitance), a jog wheel and/or a jog switch. The user input unit 130 may be configured as a touchpad in cooperation with a touch screen display, as will be described below in more detail.

The sensing unit 140 may provide status measurements of various aspects of the mobile terminal 100. For example, the sensing unit 140 may detect an open/close status of the mobile terminal 100, a relative positioning of components (e.g., a display and keypad) of the mobile terminal 100, a change of position of the mobile terminal 100 or a component of the mobile terminal 100, a presence or absence of user contact with the mobile terminal 100, an orientation or acceleration/deceleration of the mobile terminal 100, etc. When the mobile terminal 100 is a slide-type mobile terminal, the sensing unit 140 may sense whether a sliding portion of the mobile terminal 100 is opened or closed. The sensing unit 140 may also sense the presence or absence of power provided by the power supply unit 190, the presence or absence of a coupling or other connection between the interface unit 170 and an external device, etc.

The interface unit 170 may couple the mobile terminal 100 with external devices, such as wired/wireless headphones, external chargers, power supplies, storage devices configured to store data (e.g., audio, video, pictures, etc.), earphones, and microphones, etc. In addition, the interface unit 170 may use a wired/wireless data port, a card socket (e.g., for coupling to a memory card, a subscriber identity module (SIM) card, a user identity module (UIM) card, a removable user identity module (RUIM) card, etc.), audio input/output ports and/or video input/output ports, for example.

When the mobile terminal 110 is connected to an external cradle, the interface unit 710 may become a passage for supplying the mobile terminal 100 with a power from the cradle or a passage for delivering various command signals inputted from the cradle by a user to the mobile terminal 100. Each of the various command signals inputted from the cradle or the power can operate as a signal enabling the mobile terminal 100 to recognize that it is correctly loaded in the cradle.

The output unit 150 may include various components that support output requirements of the mobile terminal 100. The mobile terminal 100 may include a display 151 that visually displays information associated with the mobile terminal 100. For example, if the mobile terminal 100 is operating in a phone call mode, the display 151 may provide a user interface or a graphical user interface that includes information associated with placing, conducting, and/or terminating a phone call. As another example, if the mobile terminal 100 is in a video call mode or a photographing mode, the display 151 may additionally or alternatively display images that are associated with these modes.

The display 151 may also include a touch screen working in cooperation with an input device, such as a touchpad. This configuration may permit the display 151 to function both as an output device and an input device.

The display 151 may also be implemented using display technologies including a liquid crystal display (LCD), a thin film transistor-liquid crystal display (TFT-LCD), an organic light-emitting diode display (OLED), a flexible display and a three-dimensional display, for example.

The mobile terminal 100 may also include one or more displays. A two-display embodiment may include an internal display (viewable when the terminal is in an opened position) and an external display (viewable in both opened and closed positions).

The touchscreen may be configured to detect a touch input pressure as well as a touch input position and size.

A proximity sensor (not shown) may be provided within or around the touchscreen. The proximity sensor may detect an object approaching a prescribed detecting surface or a presence or non-presence of an object existing around the sensor using an electromagnetic power or infrared rays without mechanical contact. The proximity sensor may be superior to a contact sensor in lifespan and utilization.

An operational principle of the proximity sensor may now be explained. If an object approaches a sensor detecting surface while an oscillation circuit oscillates a sine radio frequency (RF), an oscillation amplitude of the oscillation circuit may attenuate or stop. This change may be converted to an electric signal to detect a presence or non-presence of the object. If any material (except a metallic material) comes between the RF oscillation proximity sensor and the object, the proximity switch may detect the object.

If the touchscreen is electrostatic, the touchscreen may detect the proximity of a pointer through an electric field change attributed to the proximity of the pointer.

If the pointer is placed in a vicinity of the touchscreen without actually contacting the touchscreen, a position of the pointer and a distance between the pointer and the touchscreen may be detected. An action enabling the pointer approaching the touchscreen to be recognized may be referred to as a 'proximity touch' and an action enabling the pointer to actually come into contact with the touchscreen may be referred to as a 'contact touch'. A position at which the proximity touch is made to the touchscreen using the pointer may be a position of the pointer vertically corresponding to the touchscreen when the pointer makes the proximity touch.

If the proximity sensor is used, a proximity touch and a proximity touch pattern (e.g., proximity touch distance, proximity touch direction, proximity touch speed, proximity touch position, proximity touch moving state, etc.) may be sensed. Information may be output corresponding to the sensed proximity touch action and the proximity touch pattern to the touchscreen.

FIG. 1 further shows the output unit 150 includes an audio output module 152 that supports audio output requirements of the mobile terminal 100. The audio output module 152 may be implemented using one or more speakers, buzzers, other audio producing devices, and/or combinations thereof. The audio output module 152 may function in various modes including a call-receiving mode, a call-placing mode, a recording mode, a voice recognition mode and/or a broadcast reception mode. During operation, the audio output module 152 may output audio relating to a particular function (e.g., call received, message received, and errors).

The output unit 150 may further include an alarm module 153 to signal or otherwise identify occurrence of a particular event associated with the mobile terminal 100. Alarm events may include a call received, a message received and/or user input received. An example of such an output may include providing tactile sensations (e.g., vibration) to a user. For example, the alarm module 153 may vibrate in response to the mobile terminal 100 receiving a call or a message. As another example, a vibration may be provided by the alarm module 153 in response to receiving user input at the mobile terminal 100, and thereby providing a tactile feedback mechanism. The various outputs provided by the components of the output unit 150 may be separately performed, or such output may be performed using any combination of such components.

The memory 160 may store various types of data to support processing, control, and storage requirements of the mobile terminal 100. The data may include program instructions for applications operating on the mobile terminal 100, call history, contact data, phonebook data, messages, pictures, video, etc.

Data for various patterns of vibration and/or sound outputted in case of a touch input to the touchscreen may be stored in the memory 160.

Map information may be stored in the memory, and a user's convenience may be further provided in a manner of providing the map information to a user. A recent user history or a cumulative user frequency of each menu in the mobile terminal 100 may also be stored in the memory 160.

Further, the memory 160 shown in FIG. 1 may be implemented using any type or combination of suitable volatile and non-volatile memory or storage devices including random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, card-type memory, or other similar memory or data storage device.

The mobile terminal 100 may also include the controller 180 to control the overall operations of the mobile terminal 100. For example, the controller 180 may perform control and processing associated with voice calls, data communications, instant message communications, video calls, camera operations and recording operations. As shown in FIG. 1, the controller 180 may include a multimedia module 181 for providing multimedia playback functions. The multimedia module 181 may be configured as part of the controller 180, or may be implemented as a separate component.

The controller 180 may perform a pattern recognizing process for recognizing a writing input and a picture drawing input carried out on the touchscreen as characters or images, respectively.

The power supply unit 190 may provide power for the various components for the portable device. The provided power may be internal power, external power, and/or a combination thereof.

The above arrangements may be implemented in a computer-readable medium using, for example, computer software, hardware, or some combination thereof.

For a hardware implementation, the above described arrangements may be implemented within one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, and/or a selective combination thereof. Arrangements may also be implemented by the controller 180.

For a software implementation, the above described arrangements may be implemented with separate software modules, such as procedures and functions, each of which may perform one or more of the functions and operations described herein. The software codes may be implemented with a software application written in any suitable programming language and may be stored in a memory (e.g., the memory 160), and executed by a controller or processor (e.g., the controller 180).

The mobile terminal 100 may also be implemented in a variety of different configurations, such as a folder-type, a slide-type, a bar-type, a rotational-type, a swing-type and/or combinations thereof. The following disclosure may primarily relate to a slide-type mobile terminal. However, the teachings apply to other types of terminals.

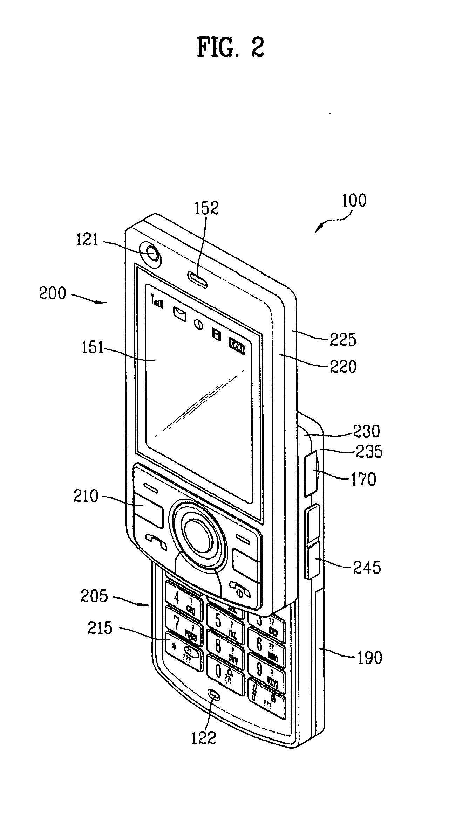

FIG. 2 is a front view of the mobile terminal 100 according to an example arrangement. Other arrangements may also be provided.

As shown in FIG. 2, the mobile terminal 100 may include a first body 200 configured to slidably cooperate with a second body 205.

The user input unit 130 described in FIG. 1 may include a first input unit such as function keys and four directional keys 210 (or function keys), a second input unit such as keypad 215 and a third input unit such as side keys 245. The function keys 210 may be associated with the first body 200, and the keypad 215 may be associated with the second body 205. The keypad 215 may include various keys such as numbers, characters, and symbols to enable a user to place a call, prepare a text or multimedia message, and/or otherwise operate the mobile terminal 100.

The first body 200 may slide relative to the second body 205 between opened and closed states (or positions/configurations). In case of a folder-type mobile terminal, a first body may fold and unfold relative to a second body between the opened and closed positions. In case of a swing-type mobile terminal, a first body may swing relative to a second body between opened and closed positions.

In a closed position, the first body 200 is positioned over the second body 205 in such a manner that the keypad 215 is substantially or completely obscured by the first body 200. In the opened position, user access to the keypad 215 may be possible. The function keys 210 may be configured for a user to enter commands such as start, stop and scroll.

The mobile terminal 100 is operable in either a standby mode, in which it is able to receive a call or message and to receive and respond to network control signaling or an active call mode. The mobile terminal 100 may function in the standby mode in the closed position and function in an active mode in the opened position. The mode configuration may be changed as required or desired.

The first body 200 is shown in FIG. 2 as being formed from a first case 220 and a second case 225. The second body 205 is shown as being formed from a first case 230 and a second case 235. The first case 230 and the second case 235 may be formed from a suitably rigid material, such as injection molded plastic, or formed using metallic material, such as stainless steel (STS) and titanium (Ti).

One or more intermediate cases may be provided between the first case and second case of one or both of the first body 200 and second body 205. The first body 200 and the second body 205 may be sized to receive electronic components necessary to support operation of the mobile terminal 100.

The first body 200 is shown in FIG. 2 as having the camera 121 and the audio output unit 152, which is configured as a speaker, positioned relative to the display 151. The camera 121 may be selectively positioned relative to first body 200 such as by rotation or swiveling.

The function keys 210 may be positioned adjacent to a lower side of the display 151, which is shown implemented as an LCD or an OLED. The display 151 may also be configured as a touch screen having an underlying touchpad that generates signals responsive to user contact with the touchscreen, such as with a finger or stylus.

The second body 205 is shown in FIG. 2 as having the microphone 122 positioned adjacent to the keypad 215 and having the side keys 245, which are one type of a user input unit, positioned along the side of second body 205. The side keys 245 may be configured as hot keys, such that the side keys 245 are associated with a particular function of the mobile terminal 100. The interface unit 170 may be positioned adjacent to the side keys 245, and the power supply unit 190 in a form of a battery may be located on a lower portion of the second body 205.

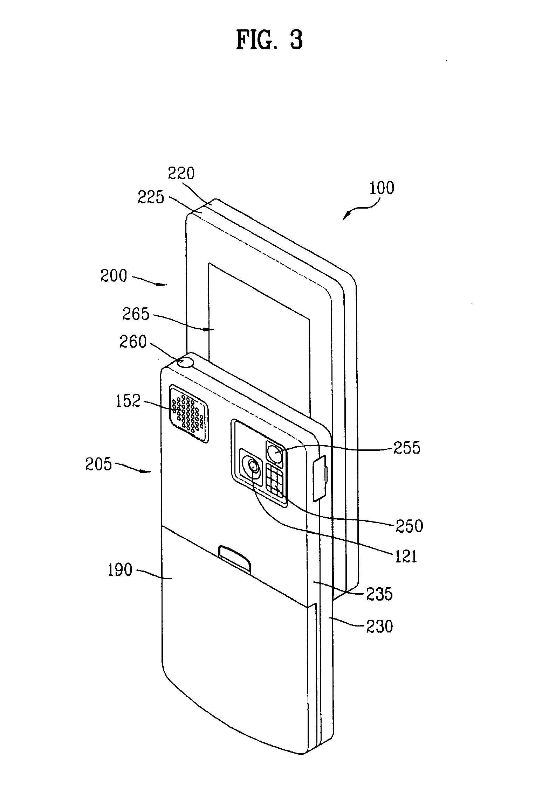

FIG. 3 is a rear view of a mobile terminal according to an example arrangement. Other arrangements may also be provided.

As shown in FIG. 3, the second body 205 may include the camera 121, a flash 250 and a mirror 255. The flash 250 may operate in conjunction with the camera 121 of the second body 205. The mirror 255 may assist a user to position the camera 121 in a self-portrait mode. The camera 121 of the second body 205 may face a direction opposite to a direction faced by the camera 121 of the first body 200.

The cameras 121 of the first and second bodies 200 and 205 may have the same capabilities or different capabilities. For example, the camera 121 of the first body 200 may operate with a relatively lower resolution than the camera 121 of the second body 205. Such an arrangement may work well during a video conference call, for example, in which reverse link bandwidth capabilities may be limited. The relatively higher resolution of the camera 121 of the second body 205 may be useful for obtaining higher quality pictures for later use.

The second rear case 235 may also include the audio output module 152. The audio output modules 152 of the first and second bodies 200 and 205 may cooperate together to provide stereo output. Either or both of the audio output modules 152 may be configured to operate as a speakerphone.

The mobile terminal 100 may also include a broadcast signal receiving antenna 260 located at one side of the second rear case 235. The antenna 260 may function in cooperation with the broadcasting receiving module 111 of FIG. 1. The antenna 260 may be installed at the second body 205 so as to be drawn-out. The antenna 260 may also be fixed to the second body 205. The rear case 225 of the first body 200 may include a slide module 265 in which one part slidably couples with a corresponding slide module of the second body 205. Another part of the slide module 265 may be provided at the second front case 230 of the second body 205.

The second camera 121 may be provided at the second body 205. However, the position of the second camera 121 is not limited to the above description. For example, at least one of the components described above as being provided at the second rear case 235 may also be provided on the first body 200 such as on the first rear case 225. Components at the first rear case 225 in the closed configuration can be protected by the second body 205. Further, the camera 121 of the first body 200 may be provided without the camera 121 of the second body 205. The camera 121 of the first body 200 may be rotatably formed to capture an object that can be captured by the camera 121 of the second body 205.

The mobile terminal 100 of FIGs. 1 to 3 may operate within a communication system that transmits data via frames or packets, including both wireless and wireline communication systems, and satellite-based communication systems.

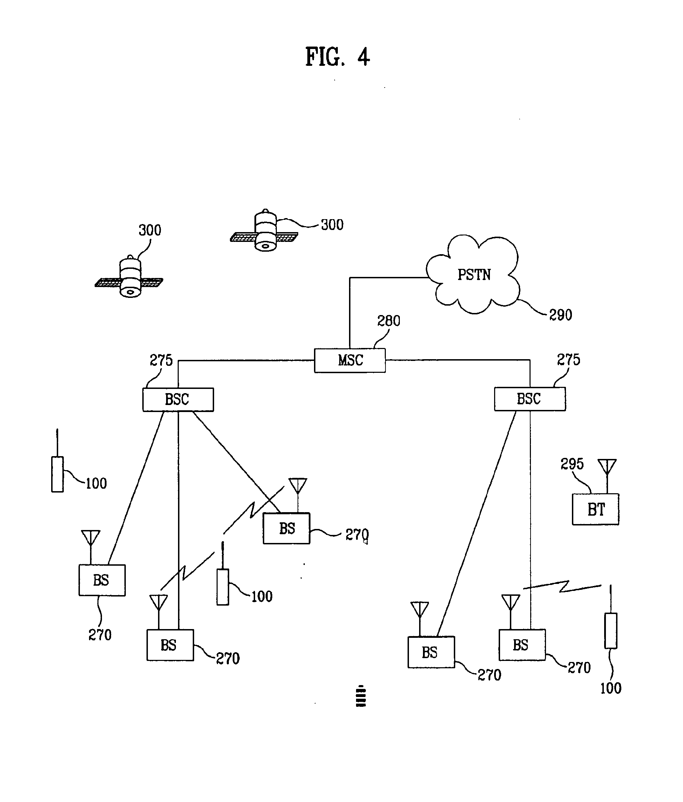

Communication systems where the mobile terminal can operate will now be described with reference to FIG. 4.

Examples of air interfaces utilized by the communication systems include, for example, frequency division multiple access (FDMA), time division multiple access (TDMA), code division multiple access (CDMA), and universal mobile telecommunications system (UMTS), the long term evolution (LTE) of the UMTS, and the global system for mobile communications (GSM). For ease of description, the further description may relate to a CDMA communication system, although the teachings may apply to other systems.

As shown in FIG. 4, a CDMA wireless communication system may include a plurality of mobile terminals 100, a plurality of base stations (BS) 270, a plurality of base station controllers (BSC's) 275, and a mobile switching center (MSC) 280. The MSC 280 may interface with a Public Switched Telephone Network (PSTN) 290, and the MSC 280 may interface with the BSCs 275. The BSCs 275 may be coupled to the base stations 270 via backhaul lines. The backhaul lines may be configured in accordance with any of several interfaces including E1/T1, ATM, IP, PPP, Frame Relay, HDSL, ADSL, or xDSL, for example. Further, the system shown in FIG. 4 may include two or more BSCs 275.

Each of the base stations 270 may include one or more sectors, each sector having an omni-directional antenna or an antenna pointed in a particular direction radially away from the base station 270. Alternatively, each sector may include two or more antennas for diversity reception. Each base station 270 may support a plurality of frequency assignments, with each frequency assignment having a particular spectrum (e.g., 1.25 MHz, 5 MHz).

The intersection of a sector and frequency assignment may be referred to as a CDMA channel. The base stations 270 may also be referred to as Base Station Transceiver Subsystems (BTSs). The term 'base station' may refer collectively to a BSC 275, and one or more base stations 270. The base stations may also be denoted as cell sites. Alternatively, individual sectors of a given base station 270 may also be referred to as cell sites.

FIG. 4 also shows a Broadcasting Transmitter (BT) 295 that may send broadcasting signals to the mobile terminals 100 operating within the system. The broadcast receiving module 111 (FIG. 1) provided at the mobile terminal 100 may receive broadcast signals transmitted by the BT 295.

FIG. 4 further shows global positioning system (GPS) satellites 300. Such satellites facilitate locating the position of some or all of the mobile terminals 100. FIG. 4 shows two satellites, although positioning information may be obtained with greater or fewer satellites. In addition, the position-location module 115 (FIG. 1) may cooperate with the satellites 300 to obtain desired position location information. However, other types of position detection technology, such as location technology that may be used in addition to or instead of GPS location technology, may alternatively be implemented. Some or all of the GPS satellites 300 may alternatively or additionally provide satellite DMB transmissions.

During operation of the wireless communication system, the base stations 270 may receive sets of reverse-link signals from the mobile terminals 100. The mobile terminals 100 may engage in calls, messaging, and other communications. In addition, each reverse-link signal received by a given base station 270 may be processed within that base station 270, and the resulting data may be forwarded to an associated BSC 275. The BSC 275 may provide call resource allocation and mobility management functionality including soft handoffs between the base stations 270. The BSCs 275 may also route the received data to the MSC 280, which provides additional routing services for interfacing with the PSTN 290. The PSTN 290 may interface with the MSC 280, and the MSC 280 may interface with the BSCs 275. The BSCs 275 may also control the base stations 270 to transmit sets of forward-link signals to the mobile terminals 100.

Content provided in the following description may include data in one of various types including audio data, image data, moving picture data, text data, and the like.

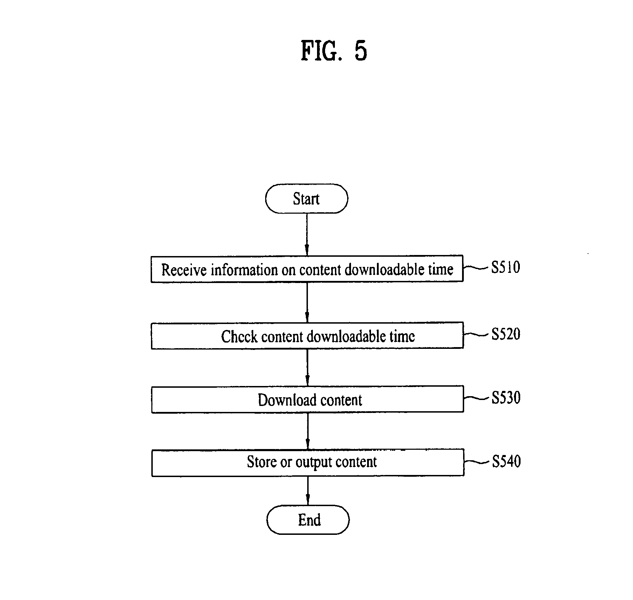

FIG. 5 is a flowchart showing a method of downloading a content in a mobile terminal according to an example embodiment of the present invention. Other embodiments and configurations are also within the scope of the present invention.

As shown in FIG. 5, the mobile terminal 100 may receive information on a content downloadable time (hereafter referred to as downloadable time information) in operation S510 via the wireless communication unit 110.

The downloadable time information may include a content downloadable start time and/or a content downloadable end time per broadcast channel and/or a broadcast time of a content downloadable broadcast program per broadcast channel.

In the receiving operation S510, the mobile terminal 100 may receive downloadable time information in a format included in broadcast relevant data or via separate data for transmitting the downloadable time information.

The broadcast relevant data may be the data containing various kinds of information on a broadcast channel or a program provided to the mobile terminal 100 (e.g., broadcast time, broadcast channel/program title, synopsis information and the like) and can be randomly received.

For example, the broadcast relevant data may include ESG data of DVB-H, EPG data of DMB or service guide data of OMA for OMA (open mobile alliance) BCAST (naming the standard determined by OMA organization for mobile broadcast system implementation).

In the ESG data, the downloadable time information may be contained in a content fragment or a schedule event fragment contained within the ESG data. In the service guide data of OMA BCAST, the downloadable time information may be contained in a schedule fragment contained within the service guide data.

In the receiving operation S510, the mobile terminal 100 may use any one of the modules included in the wireless communication unit 110 according to a type of network for transmitting the downloadable time information.

For example, in case of using a broadcast network, the terminal 100 may use the broadcast receiving module 112. In case of using a mobile communication network, the terminal 100 may use the wireless Internet module 113. In case of using a short-range communication network, the terminal 100 may use the short-range communication module 114.

The received downloadable time information may be stored in the memory 160 based on a control signal from the controller 180. When a content downloadable time is changed, the mobile terminal 100 may receive information of the changed content downloadable time and the terminal 100 may update the previously stored downloadable time information using the received information.

The mobile terminal 100 may confirm (or check) a content downloadable time in operation S520 using the downloadable time information received in the receiving operation S510.

The controller 180 may search the downloadable time information stored in the memory 160 and then confirm the content downloadable time. For example, if the downloadable time information is 'start time and end time', the controller 180 may confirm that the content downloadable time includes a period of time ranging from a start time to an end time. If the downloadable time information is 'a broadcast time of a broadcast program A', the controller 180 may confirm a broadcast time of a broadcast program A as the content downloadable time.

In operation S530, the mobile terminal 100 may download a content via a content providing channel in the content downloadable time confirmed in the confirming operation S520.

When deciding that a current time is included in the confirmed content downloadable time, the controller 180 may control the wireless communication unit 110 to download a content. The controller 180 may check whether the current time is included in the confirmed content downloadable time using a timer (not shown).

The mobile terminal 100 may perform the downloading operation S530 in case of at least one selected from the group consisting of a broadcast signal outputting state, an application driven state and a standby state. The content download may not be performed if the mobile terminal 100 is outputting a broadcast signal.

The content providing channel may include at least one selected from the group consisting of a dedicated channel for a content download (hereafter a dedicated channel) and a broadcast channel for providing a broadcast channel (hereafter a broadcast channel). In the following description, the dedicated or broadcast channel may generically be named a channel.

Since information on a channel may be defined in a service fragment contained within ESG data of DVB-H or service guide data of OMA BCAST, the mobile terminal 100 may identify a channel using information on the channel defined in the service fragment. The mobile terminal 100 may identify whether a specific channel is a broadcast channel for providing a broadcast channel, a broadcast channel for providing both a broadcast signal and a content together or a dedicated channel for a content download.

When a broadcast signal is being outputted using the mobile terminal 100, a content providing channel may correspond to a broadcast channel for providing a currently outputted broadcast signal, a different broadcast channel or a dedicated channel. Since a different IP address may be assigned to each channel in DVB-H, the content providing channel may have an IP address identical to or different from the IP address of the broadcast channel for providing the currently outputted broadcast channel.

For example, when the content providing channel is a broadcast channel, broadcast data (e.g., audio/video data) may be received for a period of a broadcast time except the content downloadable time. The terminal 100 may receive broadcast data and content allocated to a partitioned channel size for the content downloadable time.

In the following description, the downloading operation S530 may be performed by a selection made by a user.

The mobile terminal 100 may announce that a content is downloadable via the output unit 150 for the content downloadable time confirmed in the confirming operation S520. This may enable a user to select whether to download a content or not. For example, the user input unit 130 may generate a selection signal corresponding to a selection action inputted by a user. The wireless communication unit 110 may download a content according to the generated selection signal.

In the following, a content download by a user's selection may be explained with reference to the accompanying drawings.

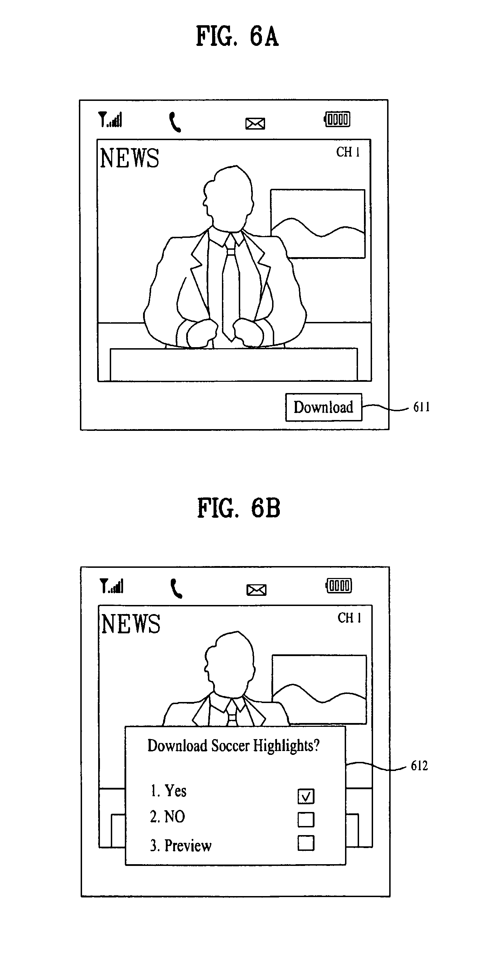

FIGs. 6A to 6D are screen configurations for announcing a content downloading function in a mobile terminal according to an example embodiment of the present invention. Other embodiments and configurations are also within the scope of the present invention.

While a broadcast signal provided on a first broadcast channel is being outputted and when it is a content downloadable time, the mobile terminal 100 may display an icon 611 as shown in FIG. 6A indicating a content downloadability on a prescribed area of a screen. The icon 611 may also be provided on a prescribed area of the screen.

If a user selects the icon 611 in FIG. 6A, the mobile terminal 100 may display a window 612 as shown in FIG. 6B for enabling a user to select whether to download a content 'Soccer Highlights' provided from the first broadcast channel. The window 612 may contain an item 'Preview' to provide information (e.g., fee, time taken for a download, size, trailer moving picture, etc.) on Soccer Highlights prior to the download of 'Soccer Highlights'.

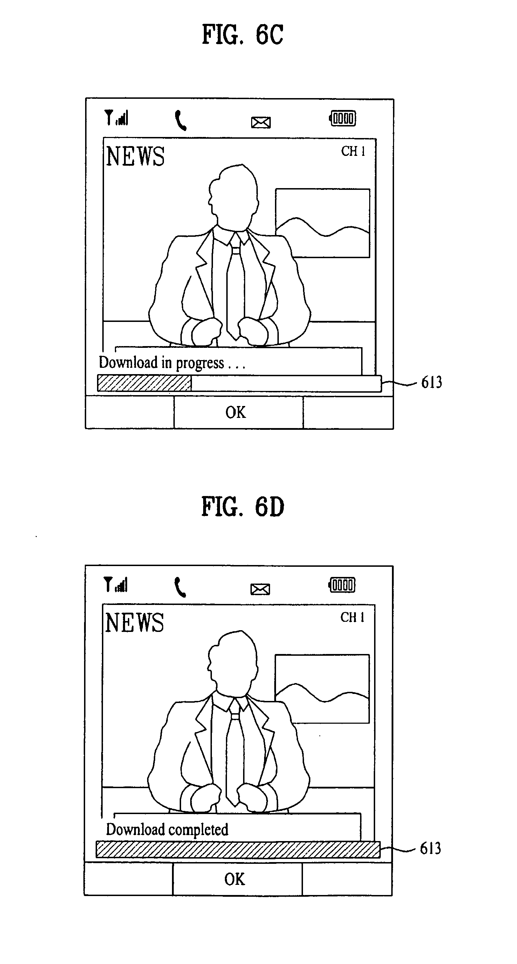

If a download execution (i.e., 'Yes') is selected by a user in FIG. 6B, the mobile terminal 100 may display an indicator 613 as shown in FIG. 6C indicating that the download is currently in progress. The indicator 613 may be displayed on a prescribed area of the screen while performing the download of 'Soccer Highlights' in another prescribed area of the screen. When the download is completed, as shown in FIG. 6D, the mobile terminal 100 may announce the download completion using the indicator 613. For example, the indicator 613 may include a progressive bar capable of indicating an extent of the download execution.

If the icon 611 in FIG. 6A is selected, the mobile terminal 100 may decide that the download execution has been selected and the mobile terminal 100 may directly enter the state shown in FIG. 6C.

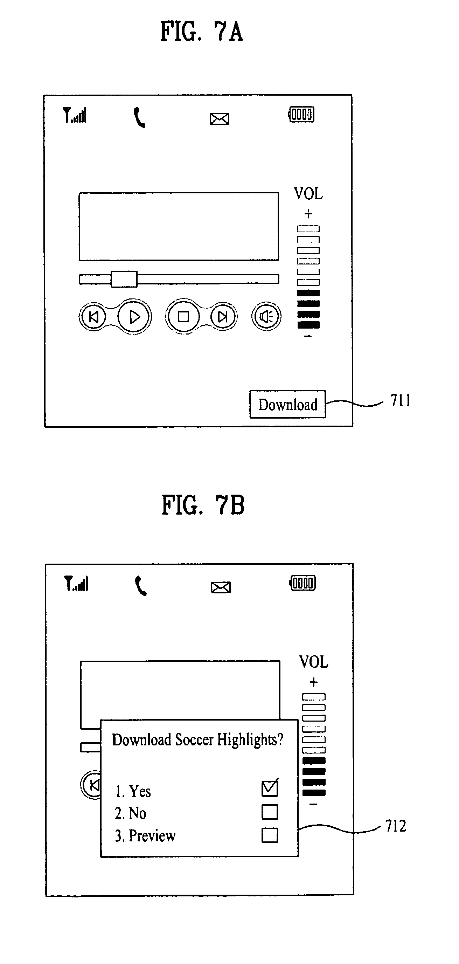

FIGs. 7A to 7E are screen configurations for announcing a content downloading function in a mobile terminal according to an example embodiment of the present invention. Other embodiments and configurations are also within the scope of the present invention.

An application may be a function mode that can be performed using the mobile terminal 100 and may include an MP3 mode, a call mode, a message mode, a camera mode, a broadcast mode or the like. FIGs. 7A to 7E relate to the MP3 mode being entered.

If the content downloadable time occurs while the mobile terminal 100 is provided in the MP3 mode, the mobile terminal 100 may display an icon 711 as shown in FIG. 7A indicating that a content is downloadable. The icon 711 may be displayed on a prescribed area of the screen.

When a user selects the icon 711 in FIG. 7A, the mobile terminal 100 may display a window 712 as shown in FIG. 7B for enabling a user to select whether to download a content 'Soccer Highlights.' The window 712 may contain an item 'Preview' to provide information on Soccer Highlights prior to the download of 'Soccer Highlights'.

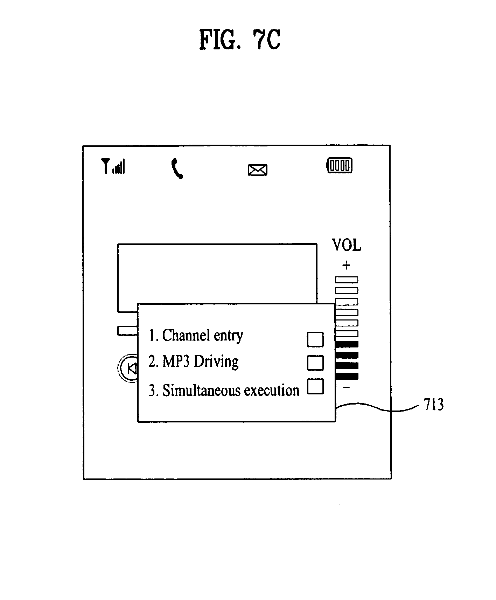

If a download execution (i.e., 'Yes') is selected by a user in FIG. 7B, the mobile terminal 100 may display a window 713 as shown in FIG. 7C for enabling a user to select whether a content providing channel will be entered in a course of the content download, whether the driven MP3 mode will be maintained or whether both of the content providing channel entry and the MP3 mode entry will be simultaneously performed. Other selections may also be made.

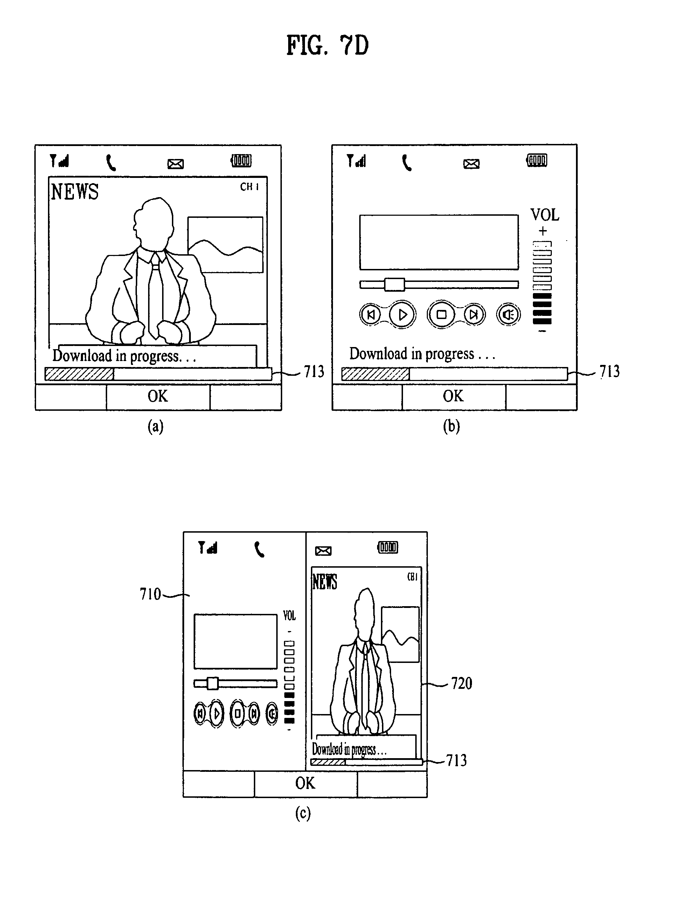

If the user selects an entry to the content providing channel (i.e., 'Channel Entry') in FIG. 7C, the mobile terminal 100 may display an indicator 714 as shown in (a) of FIG. 7D indicating that the download of 'Soccer Highlights' is currently in progress. The indicator 714 may be displayed on a prescribed area of the screen while outputting a broadcast signal provided from the content providing channel.

If the user selects MP3 driving as shown in FIG. 7C, the terminal 100 may display the indicator 714 as shown in (b) of FIG. 7D indicating that the download of 'Soccer Highlights' is in progress while maintaining an outputting of an audio signal according to the MP3 driving.

If the user selects to simultaneously execute both the content providing channel entry and the MP3 driving, the mobile terminal 100 may partition the screen into a plurality of areas. For example, the mobile terminal 100 may display an image according to the MP3 driving on a first partitioned area 710 and also display an image according to the broadcast signal output on a second partitioned area 720 as shown in (c) of FIG. 7D. The indicator 714 may indicate that the download of 'Soccer Highlights' is in progress. The indicator 714 may be displayed on a prescribed portion of the second partitioned area 720.

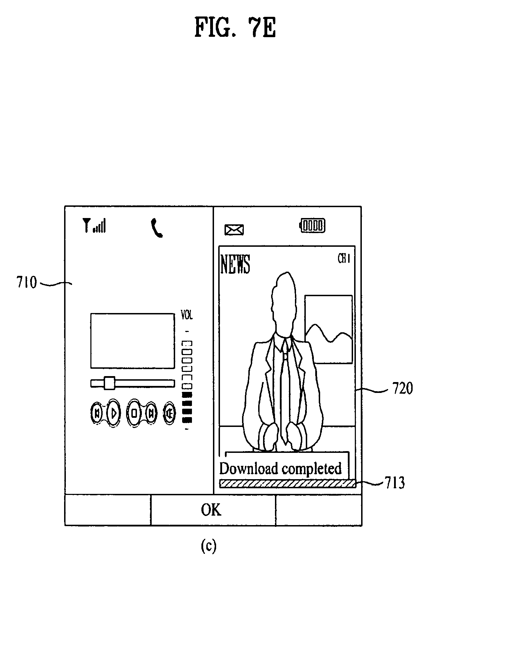

When the download of one of (a) to (c) of FIG. 7D is completed, the mobile terminal 100 may announce the download completion using the indicator 714. FIG. 7E shows the case of the download completion in (c) of FIG. 7D.

When the icon 711 in FIG. 7A is selected, the mobile terminal 100 may decide that the download execution has been selected by the user and the mobile terminal 100 may directly enter the state shown in FIG. 7C.

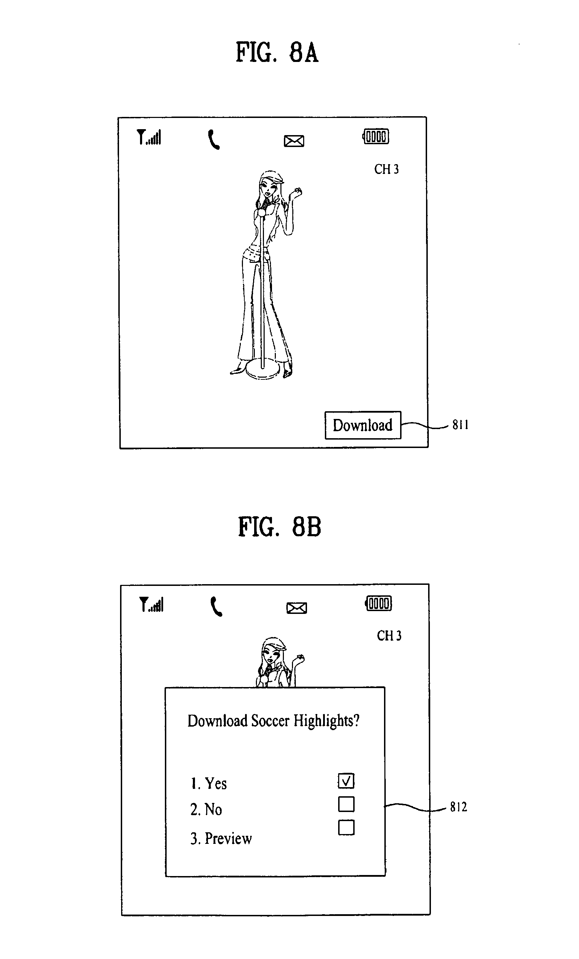

FIGs. 8A to 8E are screen configurations for announcing a content downloading function in a mobile terminal according to an example embodiment of the present invention. Other embodiments and configurations are also within the scope of the present invention.

While a broadcast signal provided on a third broadcast channel is being outputted and when it is a content downloadable time, the mobile terminal 100 may display an icon 811 as shown in FIG. 8A indicating a content downloadability on a prescribed area of a screen.

If a user selects the icon 811 in FIG. 8A, the mobile terminal 100 may display a window 812 as shown in FIG. 8B for enabling a user to select whether to download a content 'Soccer Highlights' provided from the first broadcast channel. The window 812 may contain an item 'Preview' to provide information on Soccer Highlights prior to the download of 'Soccer Highlights'.

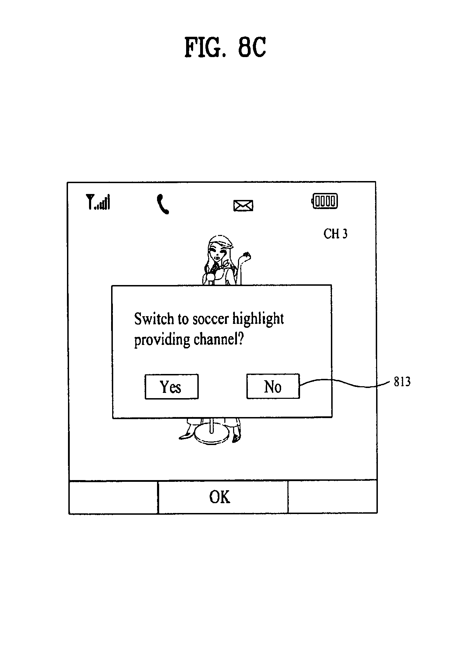

If a download execution (i.e., 'Yes') is selected by a user in FIG. 8B, the mobile terminal 100 may display a window 813 as shown in FIG. 8C for enabling the user to switch to the 'Soccer Highlights' providing channel.

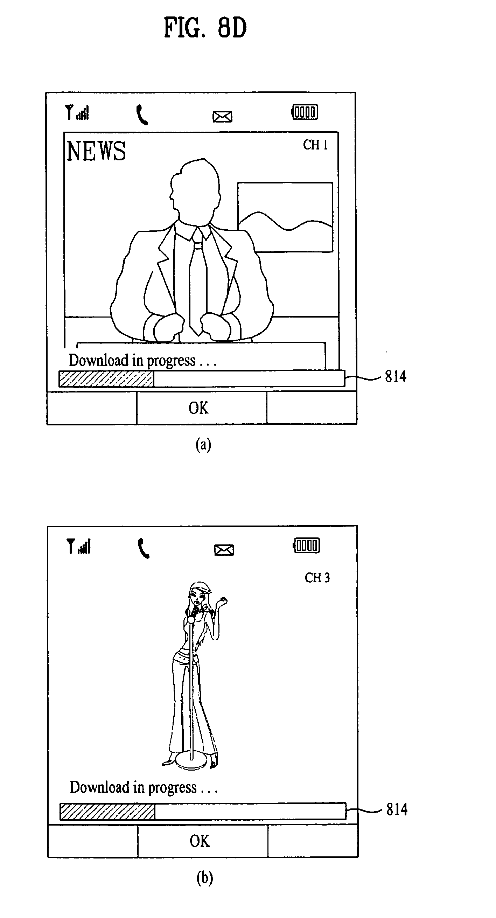

If the user selects the channel switching (i.e., 'Yes') as shown in FIG. 8C, the mobile terminal 100 may display an indicator 814 as shown in (a) of FIG. 8D indicating that the download of 'Soccer Highlights' is currently in progress. The indicator 814 may be displayed on a prescribed area of the screen while the terminal outputs the broadcast signal provided from the broadcast channel.

When the user selects a channel maintaining (i.e., 'No'), the mobile terminal 100 may display an indicator 814 as shown in (b) of FIG. 8D indicating that the download of 'Soccer Highlights' is currently in progress. The indicator 814 may be displayed on a prescribed area of the screen while the terminal maintains the output of the broadcast signal provided from the broadcast channel.

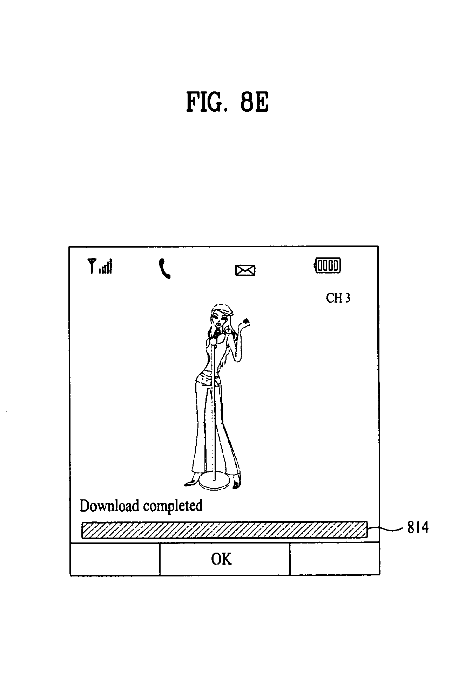

When the download in (a) or (b) of FIG. 8D is completed, the mobile terminal 100 may announce the download completion using the indicator 814. FIG. 8E shows the download completion in (b) of FIG. 8D.

If the icon 811 in FIG. 8A is selected, the mobile terminal 100 may decide that the download execution has been selected and the mobile terminal 100 may directly enter the state shown in FIG. 8C.

The icons shown in FIG. 6A, FIG. 7A or FIG. 8A may be a text, a flash, a moving picture, a still picture, a symbol, an emoticon, an animation and the like. Further, a vibration, an alarm sound, a lamp and/or the like may also be used to announce that content is downloadable (content downloadability).

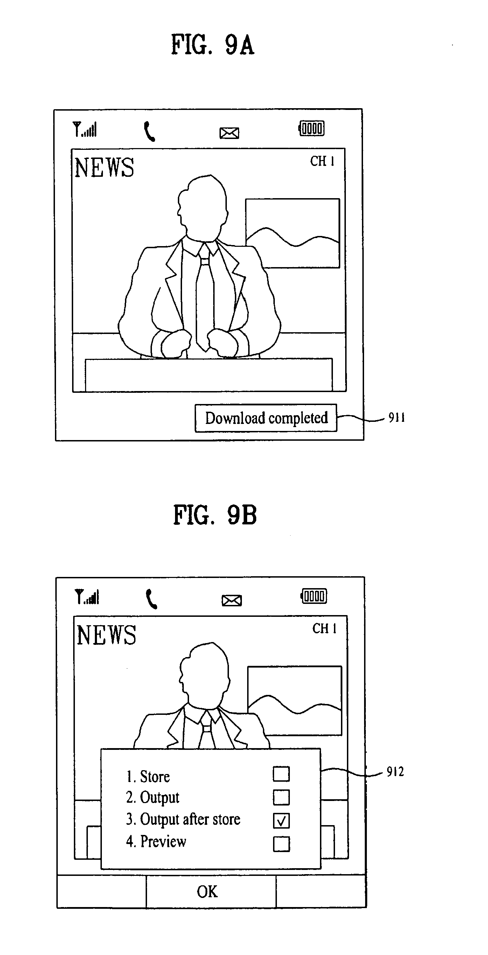

When the content download of FIG. 6D, FIG. 7E and/or FIG. 8E is completed, the mobile terminal 100 may display a window 912 as shown in FIG. 9B for enabling a user to select 'Store', 'Output', 'Output after store' or 'Preview' for the downloaded content.

Regardless of the selection made by the user in FIG. 5, the mobile terminal 100 may perform the downloading operation S530 when the content downloadable time confirmed in the confirming operation S520 is reached.

The mobile terminal 100 may perform an announcing action for automatic download completion in the broadcast signal output mode, the application driving mode and/or the standby mode.

FIG. 9A and FIG. 9B are screen configurations for announcing a content download completion in a mobile terminal according to an example embodiment of the present invention. Other embodiments and configurations are also within the scope of the present invention.

When it is confirmed that a current time is included in a content downloadable time, the mobile terminal 100 may automatically perform a content download. If the content download is completed, the mobile terminal 100 may display an icon 911 as shown in FIG. 9A on a prescribed area of the screen. The icon 911 may indicate completion of the content download.

Although not shown, the mobile terminal 100 may display an icon indicating the content download is in progress in the course of performing the content download.

If the icon 911 is selected by the user in FIG. 9A, the mobile terminal 100 may display the window 912 as shown in FIG. 9B for enabling the user to select 'Store', 'Output', 'Output after store' or 'Preview' for the downloaded content.

If the user already selected 'Output' and if the icon 911 in FIG. 9A is selected, the mobile terminal 100 may output the downloaded content.

In operation S540 of FIG. 5, the mobile terminal 100 may store or output the content downloaded in the downloading operation S530.

The memory 160 may store the downloaded content according to a control signal from the controller 180 or the output unit 150 may output the downloaded content according to a control signal from the controller 180.

The mobile terminal 100 may provide a preview for the content downloaded in the downloading operation S530 or enter a content providing channel.

The storing/outputting operation S540 may now be explained with reference to the accompanying drawings.

The mobile terminal 100 may generate a content downloadable time table using the downloadable time information received in the receiving operation S510 and then display the generated content downloadable time table.

The controller 180 may generate a content downloadable time table using the downloadable time information stored in the memory 160 and then display the generated content downloadable time table via the display 151.

The mobile terminal 100 may reserve or perform a content relevant action using the content downloadable time table to correspond to a user selection action via the user input unit 130.

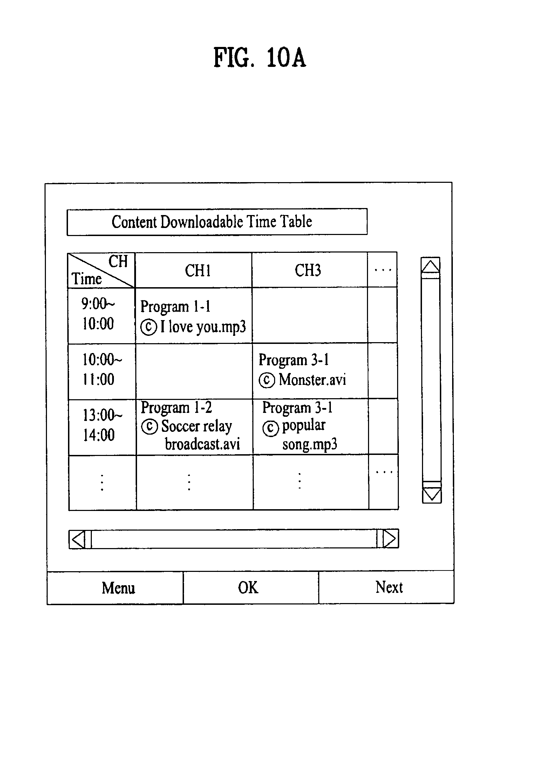

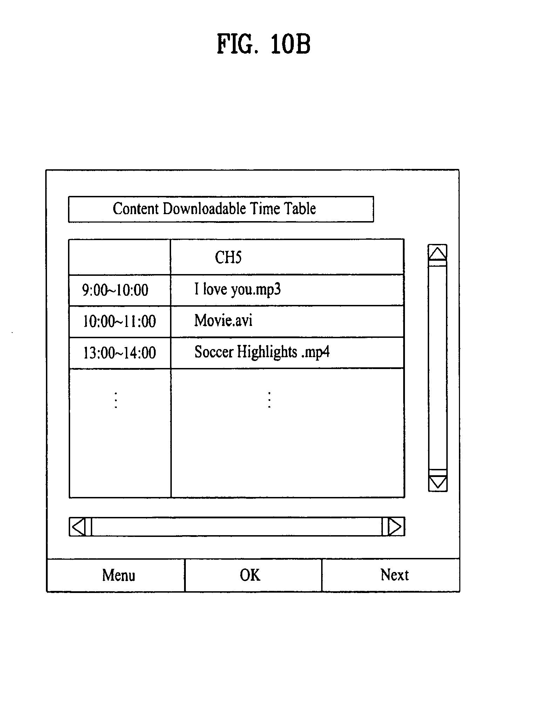

A screen configuration for displaying the content downloadable time table in the mobile terminal 100 may be explained with reference to FIG. 10A and FIG. 10B.

FIG. 10A shows a content downloadable time table in case that a content providing channel is a broadcast channel. FIG. 10B shows a content downloadable time table in case that a content providing channel is a dedicated channel.

As shown in FIG. 10A, the mobile terminal 100 may display a downloadable content in a broadcast time of a broadcast program per broadcast channel on a content downloadable time table.

As shown in FIG. 10B, the mobile terminal 100 may display a downloadable content per time zone from a content providing channel on a content downloadable time table.

In FIG. 10A or FIG. 10B, the mobile terminal 100 may display a content downloadable time table sorted according to a reference per content type, content downloadable time zone reference, content pay/free or the like.

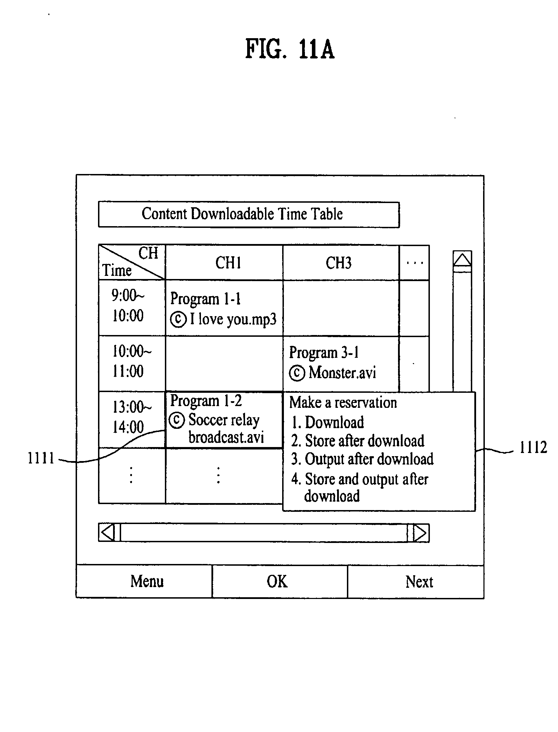

FIGs. 11A to 11C are screen configurations for a content relevant reservation and execution using a content downloadable time table in a mobile terminal according to an example embodiment of the present invention. Other embodiments and configurations are also within the scope of the present invention. For ease of description, a content 'Soccer Relay Broadcast' 1111 is assumed to be selected in FIG. 10A.

As shown in FIG. 11A, the mobile terminal 100 may display a window 1112 for enabling a user to select a reservation for an action selected from a group consisting of 'Download', 'Store after download', 'Output after download' and 'Store and output after download' for the 'Soccer Relay Broadcast' 1111.

The mobile terminal 100 may perform the reserved action according to the selection made by the user. The mobile terminal 100 may inform the user that the reserved action may be performed or is in progress. For example, if the reservation for 'Output after download' is made, the mobile terminal 100 may download the 'Soccer Relay Broadcast' 1111 during '13:00∼14:00' and may then output the downloaded 'Soccer Relay Broadcast' 1111.

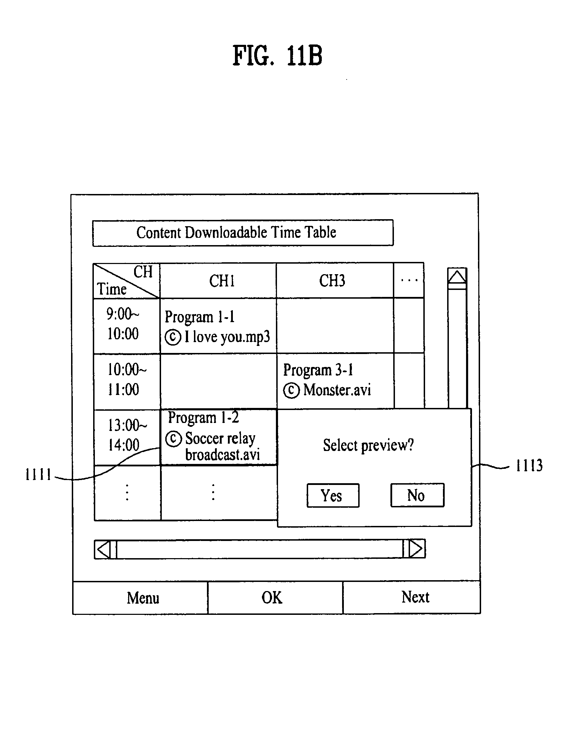

As shown in FIG. 11B, the mobile terminal 100 may display a window 1113 for enabling a user to select a preview for the 'Soccer Relay Broadcast' 1111.

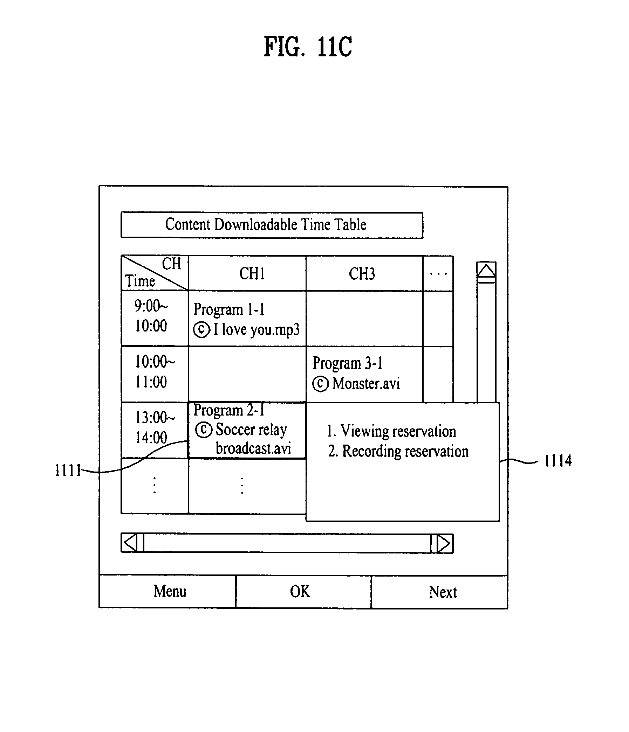

As shown in FIG. 11C, the mobile terminal 100 may display a window 1114 for enabling a user to select 'Viewing reservation' or 'Recording reservation' for 'Program 1-2' provided from a channel for a downloadable time of the 'Soccer Relay Broadcast' 1111.

The mobile terminal 100 may output or record 'Program 1-2' during the content downloadable time '13:00∼14:00'.

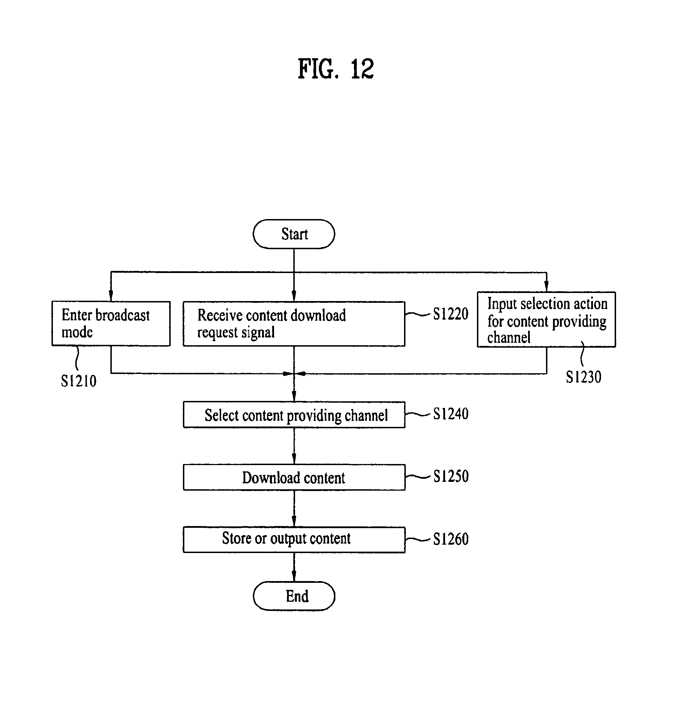

FIG. 12 is a flowchart showing a method of downloading a content in a mobile terminal in case of a broadcast mode entry, a content download request signal reception or an input of a selection action for a content providing channel according to an example embodiment of the present invention. Other operations, orders of operations and embodiments are also within the scope of the present invention.

The mobile terminal 100 may enter a broadcast mode according to a selection made by a user in operation S1210. The broadcast mode may be a mode for receiving a broadcast signal from a specific broadcast channel and then outputting the received broadcast signal.

The mobile terminal 100 may receive a selection action from a user via the user input unit 130, may generate a selection signal corresponding to the received selection action, and then perform a broadcast mode entry according to the generated selection signal using the controller 180. The controller 180 may control elements to enable operations according to the broadcast mode entry to be performed.

The mobile terminal 100 may also receive a content download request signal from a server via the wireless communication unit 110 in operation S1220.

The server may provide contents to the mobile terminal 100. The content download request signal may be the signal for making a request for the mobile terminal 100 to download a content provided by a server.

A user may input a selection action for a content providing channel to the mobile terminal 100 via the user input unit 130 in operation S1230.

In the entering operation S1210 or if an execution of at least one of the receiving operation S1220 or the inputting operation S1230 is confirmed, the mobile terminal 100 may select the content providing channel in operation S1240.

The mobile terminal 100 may select the content providing channel from a broadcast channel provided for providing a broadcast signal and a broadcast channel separately provided for a content download.

When execution of the entering operation S1210 is confirmed, the mobile terminal 100 may keep opening the selected content providing channel for a period of the broadcast mode execution. This may download a content periodically or randomly provided from the server.

When execution of the receiving operation S1220 is confirmed, the mobile terminal 100 may open the selected content providing channel for a period of the content download only. This may open the content providing channel only if the server substantially makes the content download request.

When execution of the inputting operation S1230 is confirmed, the mobile terminal 100 may select the content providing channel having been selected by the user. In this case, the content providing channel may be limited to the dedicated channel for the content download.

In operation S1250, the mobile terminal 100 may download a content from the content providing channel selected in the selecting operation S1240 via the wireless communication unit 110.

The mobile terminal 100 may perform the downloading operation S1250 in case of at least one of a broadcast signal outputting state, an application driven state and a standby state.

For example, after a content providing channel has been selected according to a broadcast mode entry, if a broadcast channel of a currently outputted broadcast signal and the selected content providing channel are different from each other (or if channel IP addresses thereof are different), the mobile terminal 100 may open both first and second channels and then download a content from the second channel by maintaining an output operation off the broadcast signal provided from the first channel.

As another example, after a content providing channel has been selected according to a broadcast mode entry, if a broadcast channel of a currently outputted broadcast signal and the selected content providing channel are different from each other (or if channel IP addresses thereof are different), the mobile terminal 100 may partition a channel size of the selected content providing channel, allocate a partial channel size to broadcast data and another partial channel size to a content, and then provide both of the broadcast signal and the content through the content providing channel.

The downloading operation S1250 may be performed according to a selection made by a user or an arbitrary decision made by the mobile terminal 100.

Execution of the downloading operation S1250 may now be explained in detail with reference to the accompanying drawings.

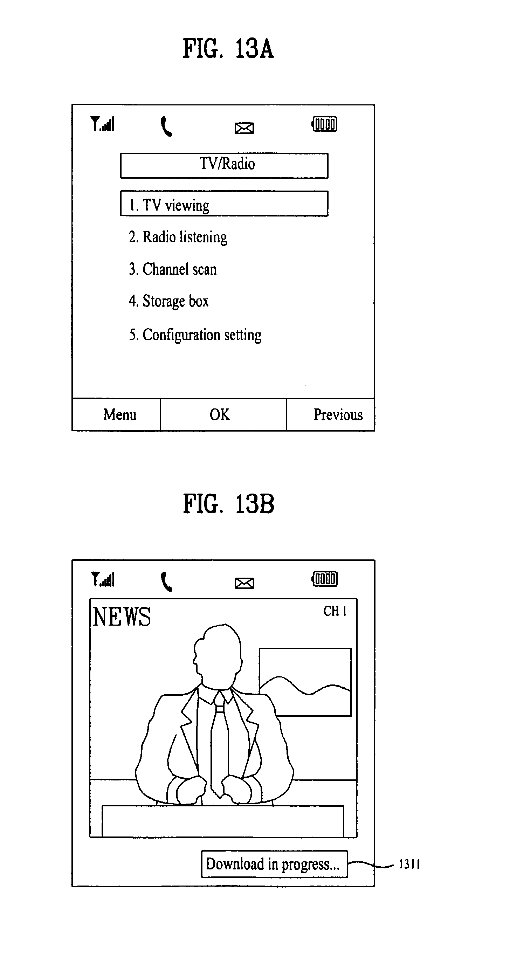

FIGs. 13A to 13C are screen configurations for a content download in case of a broadcast mode entry in a mobile terminal according to an example embodiment of the present invention. Other embodiments and configurations are also within the scope of the present invention.

When a user selects 'TV Viewing' through a broadcast mode relevant menu search, the mobile terminal 100 may enter a broadcast mode as shown in FIG. 13A.

When entering the broadcast mode, the mobile terminal 100 may output a broadcast signal provided from a specific broadcast channel (e.g., 'first channel') as shown in FIG. 13B. In this case, when entering the broadcast mode, the mobile terminal 100 may select a content providing channel for downloading a content periodically or randomly provided from a server. For example, the content providing channel may include the first channel, a different broadcast channel or a dedicated channel.

When the content download via the content providing channel is performed in FIG. 13B, the mobile terminal 100 may display an icon 1311 announcing that the content download is in progress on the screen. The icon 1311 may be displayed on a prescribed area of the screen.

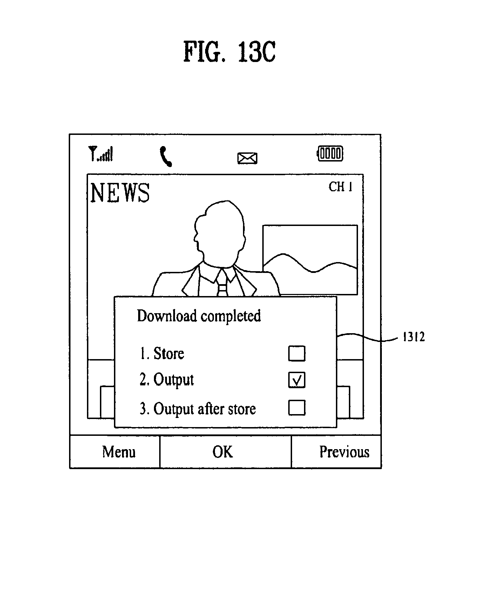

After completion of the content download, the mobile terminal 100 may display a window 1312 as shown in FIG. 13C for announcing the download completion and enabling a user to select one of 'Store', 'Output' and 'Output after store' for the downloaded content.

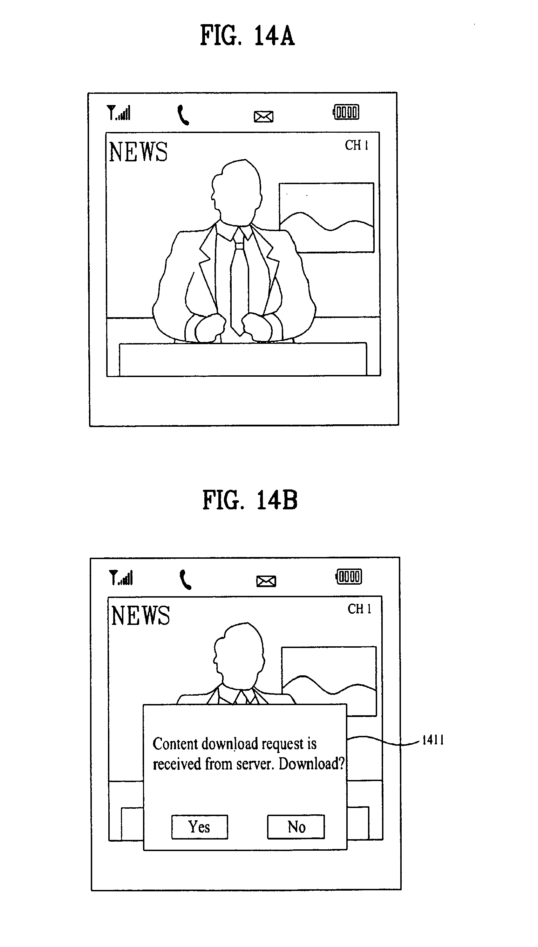

FIGs. 14A to 14D are screen configurations for a content download in case of receiving a content download request from a server in a mobile terminal according to an example embodiment of the present invention. Other embodiments and configurations are also within the scope of the present invention. For ease of description, the mobile terminal 100 receives a content download request in a broadcast signal outputting state.

When confirming a reception of the content download request from a server in a course of outputting a broadcast signal provided from a first channel in FIG. 14A, the mobile terminal 100 may display a window 1411 as shown in FIG. 14B for enabling a user to select a content download while announcing that a content download request has been made by the server.

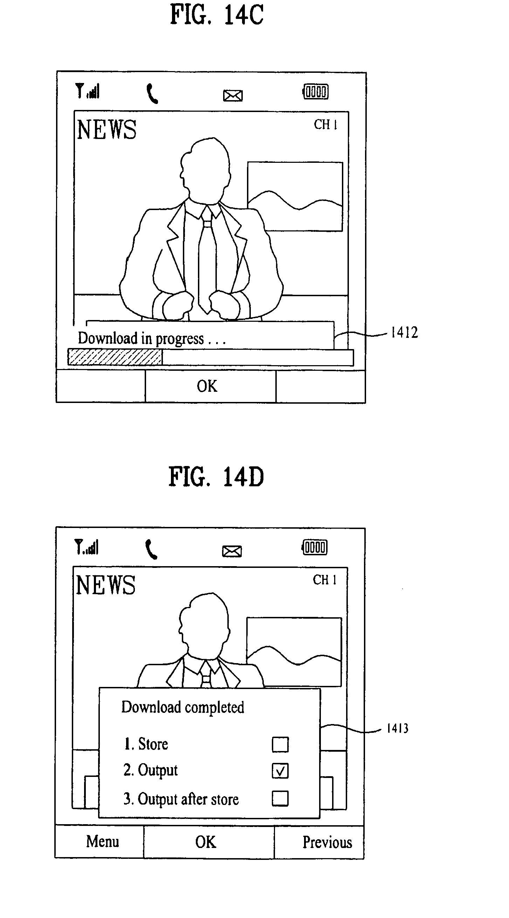

If the user selects to download a content (i.e., 'Yes') as shown in FIG. 14B, the mobile terminal 100 may select a content providing channel and display an indicator 1412 as shown in FIG. 14C for informing a user of a download in progress on a prescribed area of the screen. The indicator 1412 may indicate a progress extent of the download. For example, the content providing channel may include the first channel, a different broadcast channel, or a specific channel specified by the server.

If the content download is completed, the mobile terminal 100 may announce the download completion and display a window 1413 as shown in FIG. 14D for enabling the user to select one of 'Store', 'Output' and 'Output after store' of the downloaded content.

When confirming reception of the content download request signal, the mobile terminal 100 may automatically receive the corresponding content regardless of whether the user selects the download.

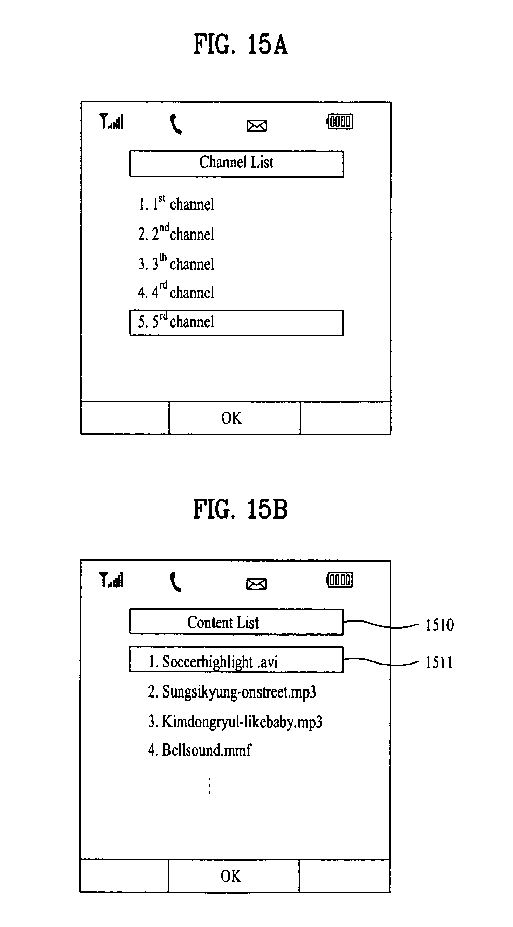

FIGs. 15A to 15D are screen configurations for a content download in case of a content providing channel selection made by a user in a mobile terminal according to an example embodiment of the present invention. Other embodiments and configurations are also within the scope of the present invention.

In FIGs. 15A to 15D, a content providing channel may be a dedicated channel for a content download. If a user selects a content providing channel 'fifth channel' from a channel list as shown in FIG. 15A, the mobile terminal 100 may display a list 1510 as shown in FIG. 15B of contents provided from the fifth channel on the screen.

Information on a content downloadable from the content providing channel can be provided via ESG data or side data provided from the content providing channel.

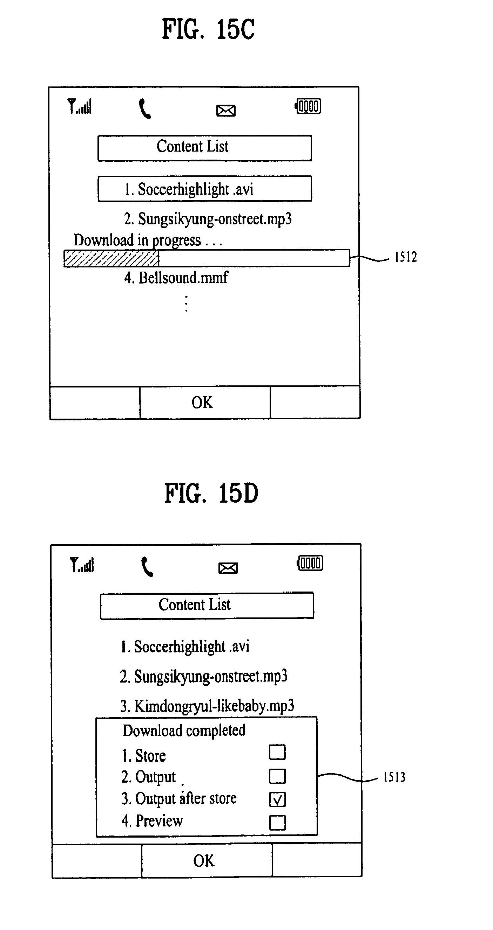

If a content 'Soccer Highlights' 1511 is selected from the displayed list 1510 in FIG. 15B, the mobile terminal 100 may display an indicator 1512 as shown in FIG. 15C for informing a user of a download in progress on a prescribed area of the screen while downloading 'Soccer Highlights' from the fifth channel. The indicator 1512 may indicate a progress extent of the corresponding download.

When the content download is completed, the mobile terminal 100 may display a window 1513 as shown in FIG. 15D for enabling the user to select one of 'Store', 'Output' and 'Output after store' of the downloaded content while announcing the download completion.

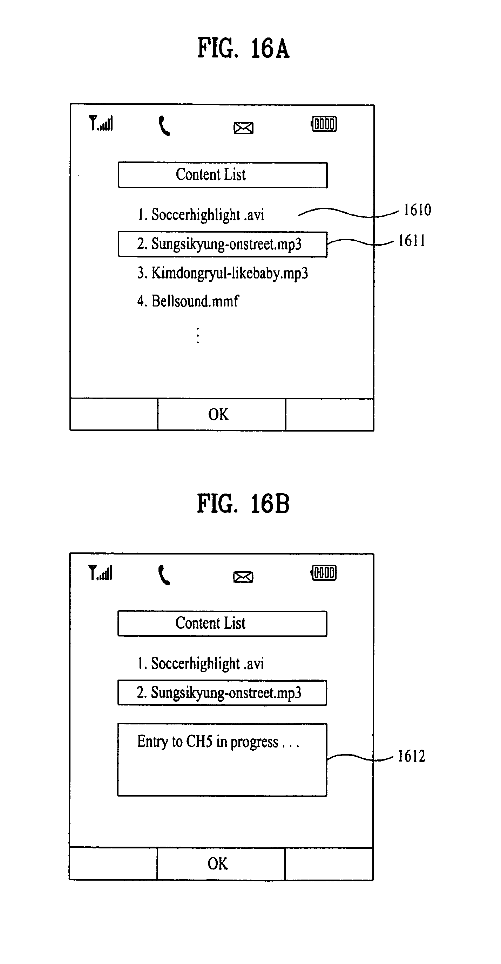

FIGs. 16A to 16D are screen configurations for an entry to a content providing channel and a selected content download in case of selecting a content from a content list in a mobile terminal according to an example embodiment of the present invention. Other embodiments and configurations are also within the scope of the present invention.

In FIGs. 16A to 16D, a content providing channel may be a dedicated channel for a content download.

If a user selects a menu item of a content list viewed through a broadcast mode relevant menu search, the mobile terminal 100 may display a list 1610 constructed with contents downloadable from the content providing channel as shown in FIG. 16A.

If 'Sung Si Kyung - On Street' 1611 is selected from the list 1610 displayed in FIG. 16A, the mobile terminal 100 may enter a fifth channel that is the content providing channel as shown in FIG. 16B. Information 1612 (such as an icon or window) may be displayed indicating that entry into the fifth channel is in progress.

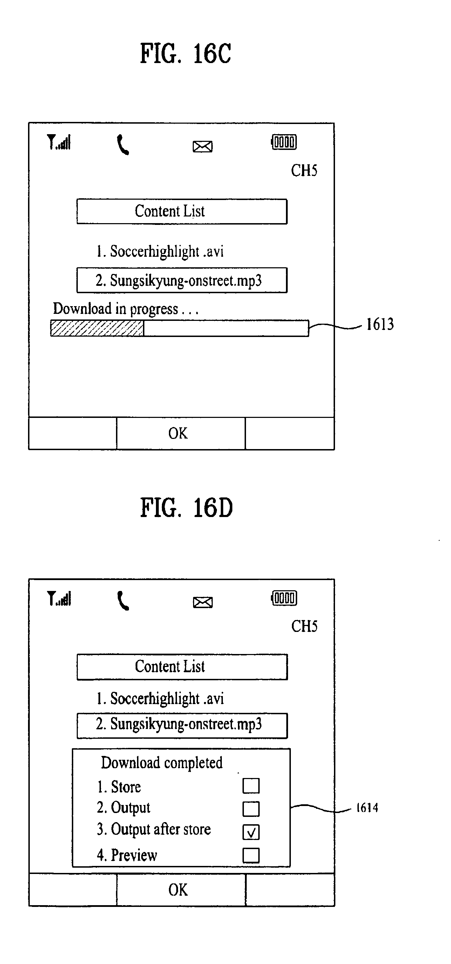

After completion of the fifth channel entry, the mobile terminal 100 may display an indicator 1613 as shown in FIG. 16C for informing the user of the download in progress on a prescribed area of the screen while downloading 'Sung Si Kyung - On Street' from the fifth channel.

If the content download is completed, the mobile terminal 100 may display a window 1614 as shown in FIG. 16D for enabling the user to select one of 'Store', 'Output' and 'Output after store' of the downloaded content while announcing the download completion.

In operation S1260 of FIG 12, the mobile terminal 100 may store or output the content downloaded in the downloading operation S1250.

The memory 160 may store the downloaded content according to a control signal from the controller 180, and the output unit 150 may output the downloaded content according to a content signal from the controller 180.

The mobile terminal 100 may provide a preview for the content downloaded in the downloading operation S1250 or the mobile terminal 100 may enter the content providing channel.

The storing/outputting operation S1260 may now be explained in detail with reference to the accompanying drawings.

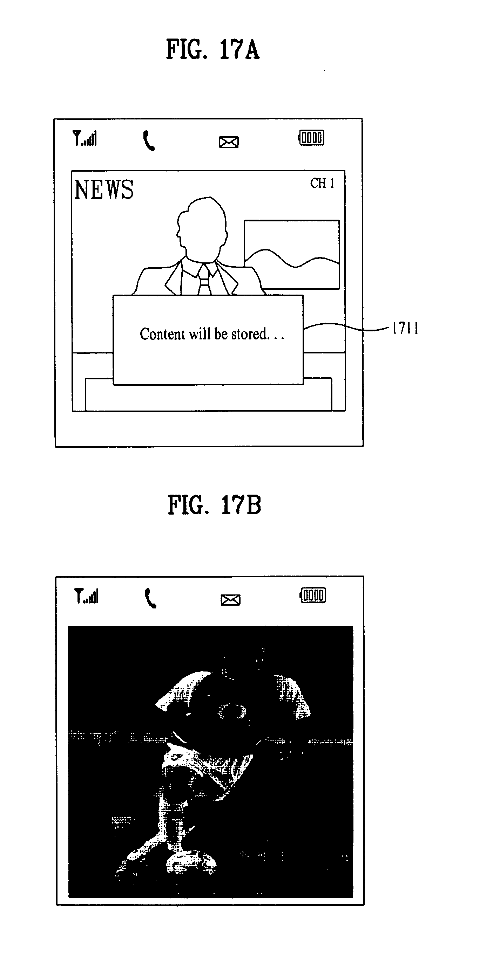

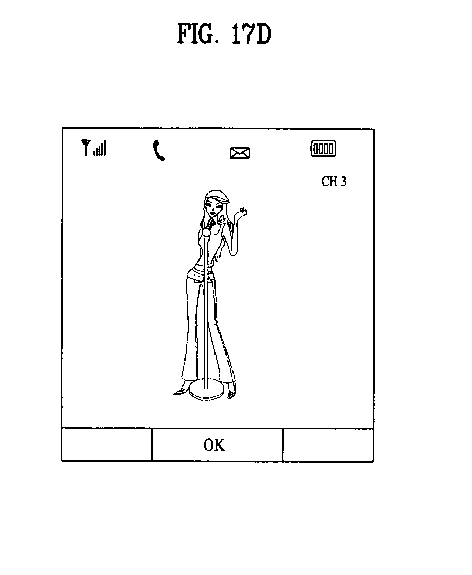

In the following description, screen configurations for performing a storage, an output and a preview of a downloaded content in the mobile terminal 100 may be explained in detail with reference to FIGs. 17A to 17D.

As shown in FIG. 17A, if a storage of a downloaded content is selected by a user, the mobile terminal 100 may inform a user of a storage in progress while storing the downloaded content in the memory 160. FIG. 17A shows an icon or window 1711 indicating that the storing is in progress.

As shown in FIG. 17B, if an output of the downloaded content is selected by a user, the mobile terminal 100 may output the downloaded content via the output unit 150.

Although not shown, if a storage and output of the downloaded content are selected by a user, the mobile terminal 100 may store and then output the downloaded content.

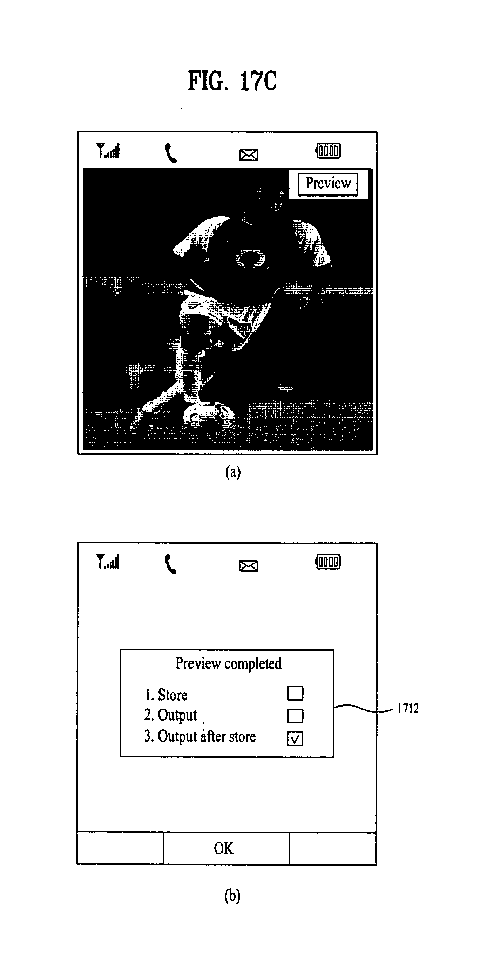

If a preview of the downloaded content is selected by a user, the mobile terminal 100 may output preview data of the downloaded content as shown in (a) of FIG. 17C and then display a window 1712 for enabling the user to select one of 'Store', 'Output' and 'Output after store' after completion of the preview data output as shown in (b) of FIG. 17C.

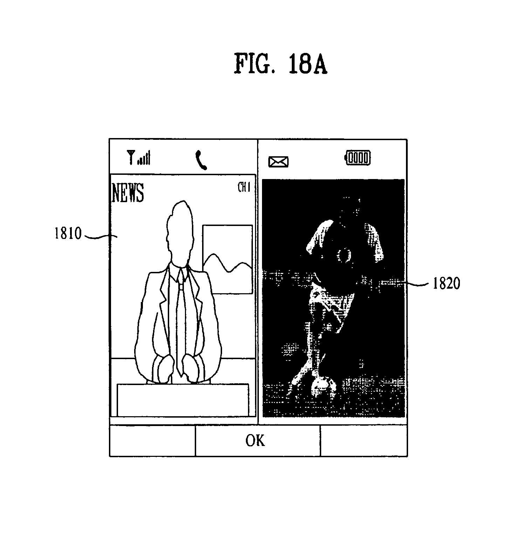

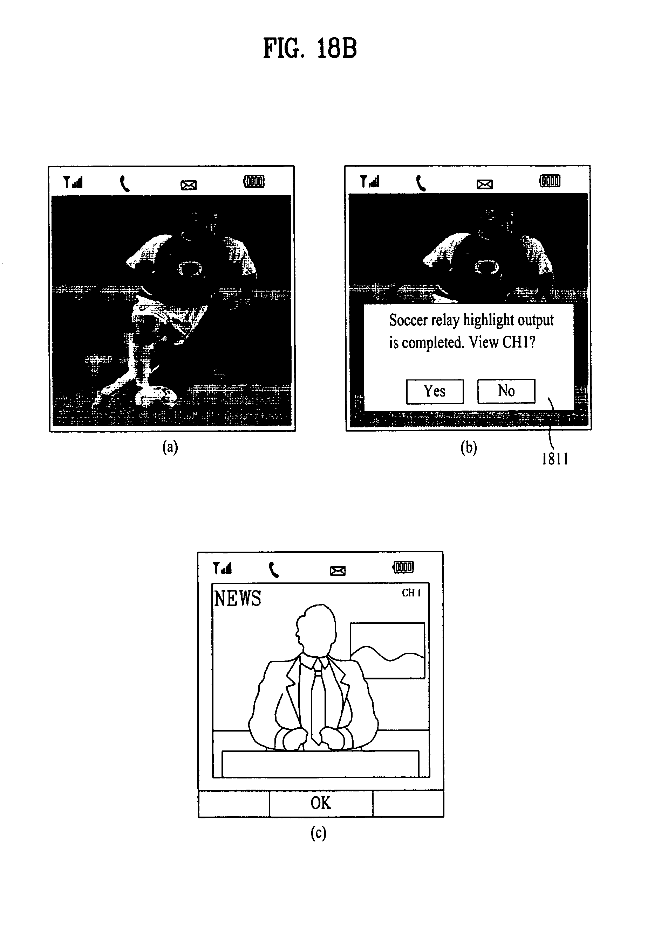

In the following description, screen configurations for a case of a content download completion in a course of outputting a broadcast in the mobile terminal 100 may be explained in detail with reference to FIG. 18A and FIG. 18B.

In case that a content download is completed in a course of a broadcast output, the mobile terminal 100 may perform an output action of a downloaded content via the output unit 150 while maintaining a broadcast signal outputting state.

For example, as shown in FIG. 18A, the mobile terminal 100 may partition the screen into a plurality of areas 1810 and 1820. The mobile terminal 100 may display a broadcast signal output image on a first area 1810 and also display a content output image on a second area 1820. The audio output module 152 may output an audio signal constructing the corresponding broadcast signal or the corresponding content according to a selection made by a user.

When a content download is completed in a course of a broadcast output, the mobile terminal 100 may hold a broadcast signal output state and perform an output action of a downloaded content. If the content outputting action is completed, the mobile terminal 100 may resume the held broadcast signal output state.

For example and referring to FIG. 18B, the mobile terminal 100 may output a video signal and an audio signal according to a content output via the output unit 150 as shown in (a) of FIG. 18B. If the content output is completed, the mobile terminal 100 may display a window 1811 for enabling a user to select whether to resume the held broadcast signal output state as shown in (b) of FIG. 18B. If the user selects a broadcast signal output state resume (i.e., 'Yes'), the mobile terminal 100 may resume the held broadcast signal output state and then output a corresponding broadcast signal as shown in (c) of FIG. 18B. Although not shown, when the content output is completed, the mobile terminal 100 may automatically resume the held broadcast signal output state regardless of the selection made by the user.

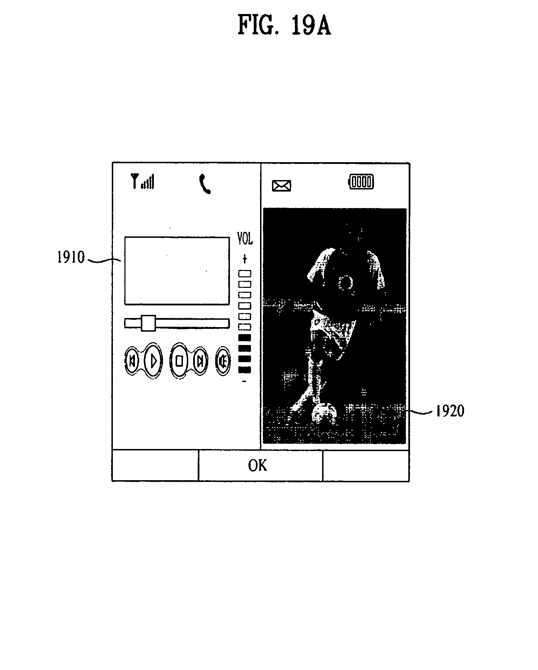

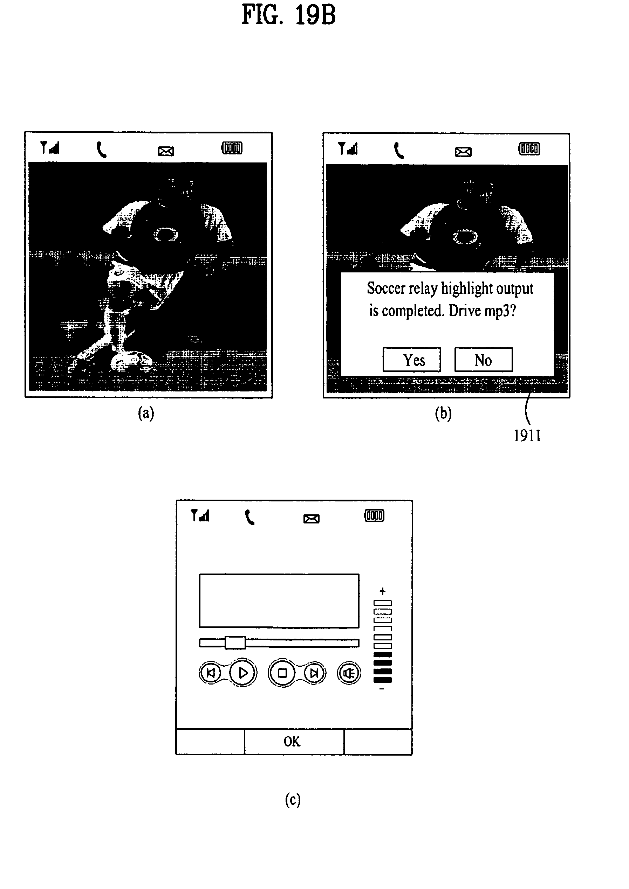

In the following description, screen configurations for a case of a content download completion in a course of driving an application in the mobile terminal 100 may be explained in detail with reference to FIG. 19A and FIG. 19B. For ease of description, an application may be limited to the MP3 mode only.

In case that a content download is completed in a course of driving an MP3 mode, the mobile terminal 100 may perform an output action of the downloaded content while maintaining the MP3 mode driven state.

For example and referring to FIG. 19A, the mobile terminal 100 may partition the screen into a plurality of areas and then display an image according to the MP3 mode driving on the first area 1910 and a content output image on the second area 1920. The audio output module 152 may output an MP3 audio signal or an audio signal constructing the content according to a selection made by a user.

When the content download is completed in a course of driving the MP3 mode, the mobile terminal 100 may hold the MP3 mode driven state and then perform an output action of the downloaded content via the output unit 150. Once the content outputting action is completed, the mobile terminal 100 may resume the held MP3 mode driven state.

For example and referring to FIG. 19B, the mobile terminal 100 may output a video signal and an audio signal according to a content output via the output unit 150 as shown in (a) of FIG. 19B. When the content output is completed, the mobile terminal 100 may display a window 1911 for enabling a user to select whether to resume the held MP3 driven mode as shown in (b) of FIG. 19B. If an MP3 mode driven state resuming (i.e., 'Yes') is selected by a user, the mobile terminal 100 may resume the held MP3 mode driven state and output a corresponding audio signal as shown in (c) of FIG. 19B. When the content output is completed, the mobile terminal 100 may automatically resume the held MP3 mode driven state regardless of a user's selection.

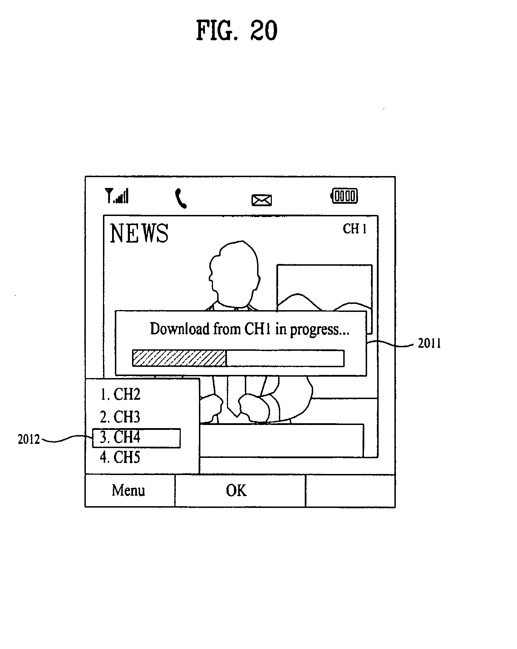

FIGs. 20 to 21B are screen configurations for a case of a channel switching in a course of downloading a content in a mobile terminal according to an example embodiment of the present invention. Other embodiments and configurations are also within the scope of the present invention.

As shown in FIG. 20, the mobile terminal 100 may enable a user to select a switching to a fourth channel in a course of downloading a content from a first channel.

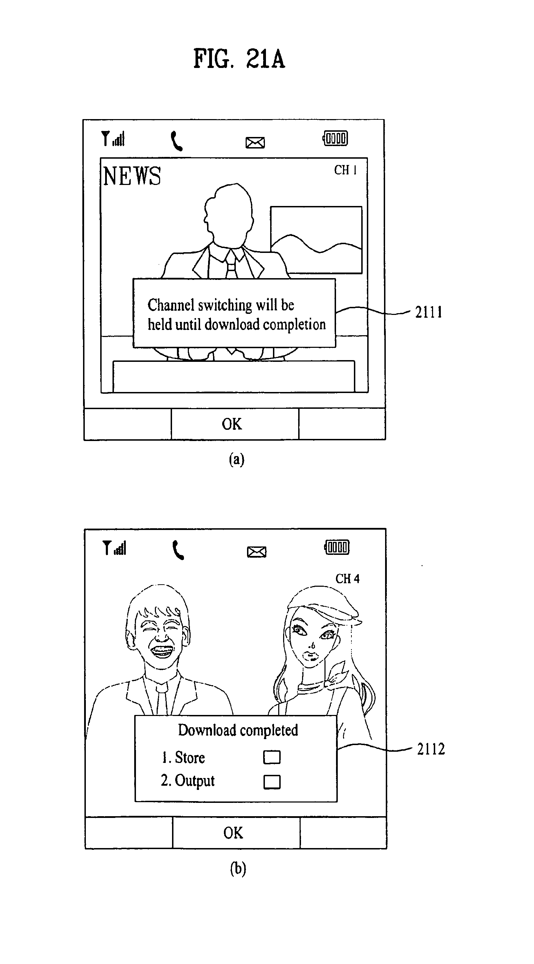

As shown in FIG. 21A, the mobile terminal 100 may hold the switching to the fourth channel while maintaining a connection to the first channel until the content download is completed as shown in (a) of FIG. 21A. FIG. 21A shows a window 211 stating that channel switching will be held until download completion. Once the content download is completed, the mobile terminal 100 may perform the switching to the fourth channel and then enable the user to select a storage or output of the downloaded content as shown in (b) of FIG. 21A. FIG. 21A also shows a window 2112 for enabling a user to select between 'store' and 'output.'

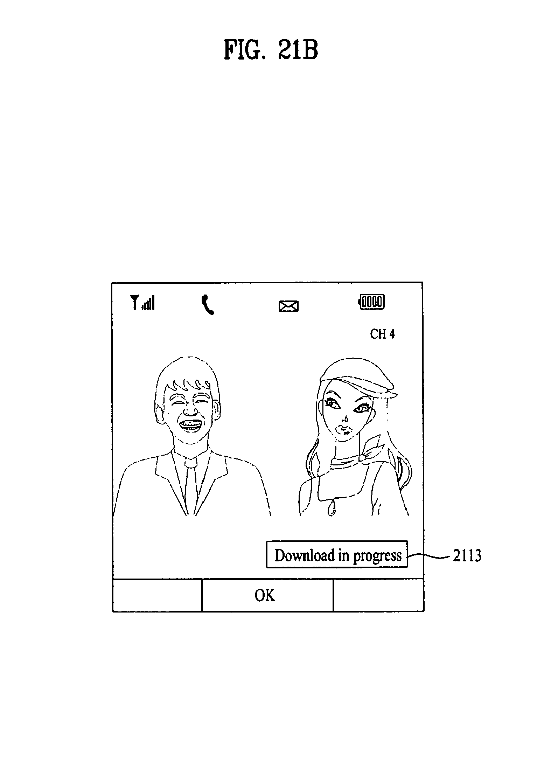

As shown in FIG. 21B, while maintaining connection to the first channel until the content download completion, the mobile terminal 100 may perform the switching to the fourth channel and output a broadcast signal provided from the fourth channel. In this case, the mobile terminal 100 may display an icon 2113 indicating that the download is in progress on a prescribed area of the screen.

In order to prevent an overlapped content download in the course of a content download, the mobile terminal 100 may decide whether to download a corresponding content after having checked whether the content to be downloaded is previously stored in the memory 160. In this case, the terminal 100 may decide whether to perform the download according to a user's selection or a random decision of the mobile terminal 100.

When the mobile terminal 100 enters a state that a content download is impossible or improper in a course of downloading the corresponding content, the terminal 100 may stop the content download until the channel reception is recovered. If the channel reception is recovered, the mobile terminal 100 may continue the content download.

The content downloading method may be implemented in a program recorded medium as computer-readable codes. The computer-readable media may include all kinds of recording devices in which data readable by a computer system are stored. The computer-readable media include ROM, RAM, CD-ROM, magnetic tapes, floppy discs, optical data storage devices, and the like for example and also include carrier-wave type implementations (e.g., transmission via Internet). The computer may include the controller 180 of the terminal 100.

Embodiments of the present invention may enable content downloadability to a user in a content downloadable time, thereby enabling the user to select whether to download a corresponding content.

Embodiments of the present invention may select a content providing channel in case of entering a broadcast mode, thereby enabling a periodically or randomly provided content to be downloaded.

Embodiments of the present invention may select a content providing channel in case of receiving a content download request signal from a server, thereby enabling a content to be downloaded in case of a presence of the content download request from the server.

Embodiments of the present invention may enable a user-specific content to be downloaded via a dedicated channel for a content download.

Embodiments of the present invention may provide a mobile terminal and method of downloading a content therein, by which contents can be downloaded via a broadcast network.

Embodiments of the present invention may provide a mobile terminal and method of downloading a content therein, by which contents can be downloaded using information on a content downloadable time.

Embodiments of the present invention may provide a mobile terminal and method of downloading a content therein, by which contents can be downloaded on a content providing channel in case of a server request or a user selection in entering a broadcast entry.

A mobile terminal may include a wireless communication unit configured to receive information on a content downloadable time, and a controller configured to check a downloadable time of a content using the received information. The controller may control the wireless communication unit to download the content via a content providing channel in the checked downloadable time.

A mobile terminal may also include a controller configured to perform a content download request signal reception from a server, to perform a selection action input for a content providing channel from a user, and to select the content providing channel. A wireless communication unit may be configured to download a content via the selected content providing channel according to a control signal from the controller.

A method may be provided for downloading a content in a mobile terminal that includes receiving information on a content downloadable time, checking a downloadable time of a content using the received information, and downloading the content via a content providing channel in the checked downloadable time.

A method of downloading a content in a mobile terminal may include performing one action of a broadcast mode entry, a content download request signal reception from a server, and a selection action input for a content providing channel from a user, selecting the content providing channel when the one action is performed, and downloading a content via the selected content providing channel.

The terms 'module', 'unit' and 'part' may be used for elements in order to facilitate the disclosure. Significant meanings or roles are not given to the suffixes themselves and it is understood that the 'module', 'unit' and 'part' can be used together or interchangeably.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art. More particularly, various variations and modifications are possible in the component parts and/or arrangements of the subject combination arrangement within the disclosure, the drawings and the appended claims. In addition to variations and modifications in the component parts and/or arrangements, alternative uses will also be apparent to those skilled in the art.

## Claims

1. A mobile terminal (100) comprising:
a wireless communication unit (110) to receive information regarding downloadable content and a specific time to download the content from a broadcast network;
a display (151) to display content; and
a controller (180) configured to control the display to provide an indication to download the downloadable content based on the specific time, and to control the wireless communication unit to download the content based on a selection by a user.

2. The mobile terminal of claim 1, wherein the specific time includes a start time and an end time.

3. The mobile terminal of claim 2, wherein the controller controls the display to provide the indication at a time between the start time and the end time.

4. The mobile terminal of claim 1, wherein the specific time includes a start time.

5. The mobile terminal of claim 4, wherein the controller controls the display to provide the indication at the start time.

6. The mobile terminal of any one of claims 1 to 5, wherein the controller controls the display to display other content while the indication is provided thereon.

7. The mobile terminal of claim 1, wherein the specific time is now.

8. The mobile terminal of any one of claims 1 to 7, wherein the controller controls to display a window on the display, wherein the window displays options to select by a user.

9. The mobile terminal of any one of claims 1 to 8, wherein the controller controls the display to provide an indicator to identify the downloading of the contents is in progress.

10. The moble terminal of any one of claims 1 to 9, wherein the controller controls the display to announce a download completion of the content after completing of the downloading of the content.

11. The mobile terminal of any one of claims 1 to 10, wherein the controller generates a content downloadable time table using the received information, wherein the display to display the content downloadable time table based on the received information according to a control signal from the controller, and a user input unit to reserve a download of the content based on the displayed content downloadable time table.

12. The mobile teriminal of any one of claims 1 to 10, wherein the controller further controls the display to display a content list including at least one downloadable content, wherein when a content is selected from the displayed content list, the controller controls the wireless communication unit to download the selected content.

13. The mobile terminal of any one of claims 1 to 12, wherein the content is provided via at least one of a dedicated channel for a content download and a broadcast channel for providing a currently outputted broadcast channel.

14. A method of downloading content to a mobile terminal, the method comprising:
receiving information at the mobile terminal regarding downloadable content and a specific time to download the content from a broadcast network;
providing an indication on a display of the mobile terminal to download the downloadable content based on the specific time;
selecting to download the downloadable content; and
downloading the content from the broadcast network to the mobile terminal based on the selection.

15. The method of claim 14, further comprising confirming a content downloadable time with the specific time.
